# EUROPÄISCHE PATENTSCHRIFT

(11) **EP 3 596 416 B1**
(45) Veröffentlichungstag und Bekanntmachung des Hinweises auf die Patenterteilung: **09.06.2021**
(21) Anmeldenummer: 18711531.6
(22) Anmeldetag: 13.03.2018
(51) Int. Cl.: F26B 17/04, F26B 23/00, F26B 23/02, F26B 3/20

(54) **BIOMASSETROCKNER UND VERFAHREN ZUM TROCKNEN VON FLIESSFÄHIGER BIOMASSE**
BIOMASS DRYER AND METHOD FOR DRYING FLOWABLE BIOMASS
SÉCHOIR DE BIOMASSE ET PROCÉDÉ PERMETTANT DE SÉCHER DE LA BIOMASSE COULANTE

(30) Priorität: 14.03.2017 DE 102017002400
(43) Veröffentlichungstag der Anmeldung: 22.01.2020
(73) Patentinhaber: Colak GmbH, 56220 Urmitz (DE)
(72) Erfinder: COLAK, Abuzer, 56220 Urmitz (DE)
(74) Vertreter: Macliing, Trixia
(86) Internationale Anmeldenummer: PCT/EP2018/056300
(87) Internationale Veröffentlichungsnummer: WO 2018/167097

(56) Entgegenhaltungen:
- DE-A1-102008 046 299
- DE-A1-102014 011 646
- US-A- 1 592 078
- US-A- 2 135 636
- US-A1- 2013 228 443

## Beschreibung

### Technisches Gebiet

Die Erfindung betrifft einen Biomassetrockner mit zumindest einem Biomassebehälter mit einem Innenvolumen zur Aufnahme fließfähiger Biomasse und zumindest einer Heißgasleitung für ein Heißgas zum Trocknen der Biomasse.

Die Erfindung betrifft ferner ein Verfahren zum Trocknen von fließfähiger Biomasse in einem Biomassetrockner.

### Stand der Technik

Aus dem Stand der Technik sind Biomassetrockner bekannt, in denen Biomasse mit Warmluft durchspült wird. Die Biomasse wird dabei von der Warmluft aufgeheizt, sodass das darin enthaltene Wasser verdampft und mit dem Luftstrom abtransportiert wird.

Aus der Druckschrift DE 20 2009 014 971 U1 ist zum Beispiel ein Biomassetrockner zum Trocknen von Schüttgut bekannt. Das Schüttgut kann beispielsweise Getreide oder andere Agrarprodukte umfassen. Zum Trocknen des Schüttguts wird ein Heizmedium verwendet. Das Heizmedium durchströmt einen Trommeltrockner. Der Trommeltrockner ist an ein Blockheizkraftwerk angeschlossen, so dass die Abgase des Blockheizkraftwerks als Heizmedium durch den Trommeltrockner geleitet werden.

Die Druckschrift DE 102014011646 A1 beschreibt eine Biomasse-Trockner-Anlage zum Trocknen von Biomasse und Verfahren zum Trocknen von Biomasse mit einer verbesserten Strömungsführung für eine gleichmäßigere Trocknung der Biomasse. Dazu kann die Biomasse-Trockner-Anlage ein Transportmittel zum Durchmischen und/oder Zerkleinern der Biomasse und/oder eine Abströmfläche zur gleichmäßigen Verteilung der Warmluft beim Einströmen in den Biomasse-Trockner umfassen. Ein Biomassetrockner nach dem Oberbegriff des Anspruchs 1 ist aus der Druckschrift US 2013/0228443 A1 bekannt. Die Biomasse bewegt sich dabei durch Öffnungen abwärts von einem Biomassebehälter zum nächsten.

Nachteilig an bekannten Biomassetrocknern ist, dass sie nur bedingt zur Trocknung von flüssiger Biomasse mit einem hohen Wasseranteil, beispielsweise oberhalb von 80 %, geeignet sind. Durch den hohen Wasseranteil weist diese Biomasse eine hohe spezifische Wärmekapazität auf, sodass viel Wärme zugeführt werden muss, um die Biomasse auf eine Verdampfungstemperatur des enthaltenen Wassers zu erhitzen. Ferner kann die Warmluft nur schlecht in flüssige Biomasse eindringen; und die bekannten Transportmittel, wie beispielsweise eine Mischtrommel, sind nicht zum wirksamen Durchmischen flüssiger Biomasse geeignet. Dadurch kann nicht genug Wärme von der Warmluft auf die Biomasse übertragen werden, um flüssige Biomasse mit einem hohen Wasseranteil mit einem ökonomisch vertretbaren Zeit- und Warmluftbedarf zu trocknen.

### Technische Aufgabe

Daraus ergibt sich die technische Aufgabe, einen möglichst einfach aufgebauten Biomassetrockner und ein möglichst einfach durchzuführendes Verfahren zu schaffen, mit denen Biomasse mit einem hohen Wasseranteil zuverlässig und effizienter als mit bekannten Vorrichtungen und Verfahren getrocknet werden kann.

### Technische Lösung

Diese Aufgabe wird durch einen Biomassetrockner gemäß Anspruch 1 und ein Verfahren gemäß Anspruch 10 gelöst. Vorteilhafte Ausgestaltungen ergeben sich aus den abhängigen Ansprüchen.

### Beschreibung der Ausführungsarten

Ein erfindungsgemäßer Biomassetrockner umfasst zumindest einen Biomassebehälter mit einem Innenvolumen zur Aufnahme der Biomasse und zumindest eine Heißgasleitung für ein Heißgas zum Trocknen der Biomasse.

Das Innenvolumen des Biomassebehälters kann beispielsweise quaderförmig und an einer Unterseite von einem Boden, an zwei einander gegenüberliegenden Stirnseiten von jeweils einer Stirnwand und an zwei einander gegenüberliegenden Längsseiten von jeweils einer Seitenwand begrenzt sein. Vorteilhafterweise sind zumindest der Boden und jeweils ein unterer Abschnitt der Seitenwände und der Stirnwände für die Biomasse dicht, sodass die Biomasse nicht unkontrolliert aus dem Biomassebehälter austreten kann. Insbesondere umschließen die unteren Abschnitte der Seitenwände und Stirnwände zumindest einen unteren Bereich des Biomassebehälters, der im Betrieb des Biomassetrockners von der Biomasse gefüllt ist. Die der Unterseite gegenüberliegende Oberseite des Biomassebehälters kann offen sein, sodass aus der Biomasse zu verdampfendes Wasser aus dem Biomassebehälter entweichen kann.

Der Boden und/oder die unteren Abschnitte der Seitenwände können zumindest eine zumindest für eine Flüssigkeit selektive Öffnung aufweisen, durch die eine in der Biomasse enthaltene Flüssigkeit, insbesondere Wasser, aus dem Innenvolumen entwichen kann, wobei feste Bestandteile der Biomasse in dem Innenvolumen zurückgehalten werden. Insbesondere kann die Öffnung eine für die Flüssigkeit permeable Membran und/oder einen für die Flüssigkeit durchlässigen Filter umfassen. Durch die Öffnung können vorteilhafterweise flüssige Bestandteile aus der Biomasse entfernt werden, sodass die Biomasse schneller und/oder mit geringerem Energiebedarf getrocknet werden kann.

Zumindest der innenseitige Übergang zwischen dem Boden und zumindest einer Wand kann abgerundet sein, damit sich keine Biomasse in einem Winkel zwischen dem Boden und der Wand festsetzt, wodurch eine gleichmäßige Erwärmung der Biomasse erschwert würde. Um eine gleichmäßige Erwärmung der Biomasse mit einem möglichst einfach aufgebauten Biomassebehälter sicherzustellen, können beispielsweise nur die Übergänge zwischen den Stirnwänden und dem Boden abgerundet sein. Der Biomassebehälter besteht zumindest an einer Innenseite vorteilhafterweise aus einem gegenüber der Biomasse korrosionsbeständigen Material, beispielsweise aus einem rostfreien Stahl, insbesondere aus V4A-Stahl.

Das Volumen des Biomassebehälters ist vorteilhafterweise an einen von einer Heißgasquelle, aus der das für den Betrieb des Biomassetrockner verwendete Heißgas bezogen wird, mit dem Heißgas bereitstellbaren Wärmestrom angepasst. Dadurch kann ein Volumen als Arbeitspunkt so gewählt sein, dass der verfügbare Wärmestrom und das Volumen optimal ausgenutzt werden, um die Biomasse möglichst energie- und zeiteffizient zu trocknen. Es wird insbesondere verhindert, dass von der Heißgasquelle bereitgestelltes Heißgas ungenutzt bleibt, weil der Biomassebehälter nicht genügend Biomasse aufnehmen kann, oder dass das Volumen des Biomassebehälters nicht vollständig genutzt werden kann, weil kein ausreichender Wärmestrom zur Verfügung steht. Wenn beispielsweise eine Breite und eine Höhe des Biomassebehälters durch eine Einhausung, die den Biomassebehälter aufnehmen soll, beispielsweise einen ISO-Container, festgelegt sind, kann das Volumen durch eine Variation einer Länge des Biomassebehälters angepasst werden.

Es hat sich herausgestellt, dass beispielsweise für einen Biomassebehälter, der in Breite und Höhe in einem ISO-Container einhausbar ist, eine Länge von 6 m für ein kleines Blockheizkraftwerk, von 8 m für ein mittleres Blockheizkraftwerk und von 12 m für ein großes Blockheizkraftwerk als Heißgasquelle einen optimalen Arbeitspunkt darstellt.

Der Biomassebehälter kann vorteilhafterweise in seiner Länge modular aufgebaut sein, sodass sich auf einfache Weise Biomassebehälter unterschiedlicher Länge zusammenstellen lassen. Insbesondere können den Biomassebehälter bildende Module lösbar miteinander verbunden sein, sodass auch eine nachträgliche Änderung der Länge des Biomassebehälters möglich ist.

Der Biomassebehälter kann ein Heizelement zur Beheizung der Biomasse umfassen. Durch das Heizelement, beispielsweise einen elektrischen Heizwiderstand, kann die Biomasse, insbesondere auch bei einem verringerten Heißgasstrom, schnell aufgeheizt werden. Dadurch ist eine geringere Baugröße des Biomassetrockners durch eine Heißgasleitung mit geringerem Strömungsquerschnitt und/oder eine schnellere Biomassetrocknung möglich. Das Heizelement kann vorteilhafterweise eine Beschichtung, insbesondere eine Nano-Beschichtung, zur effizienten Wärmeübertragung an den Biomassebehälter und/oder an die Biomasse umfassen.

Der Begriff Heißgasleitung bezeichnet einen Hohlkörper mit zumindest einer Einlassöffnung und einer Auslassöffnung, wobei ein an der Einlassöffnung in den Hohlkörper einströmendes Heißgas durch den Hohlkörper zur Auslassöffnung geleitet wird und dort aus dem Hohlkörper austritt. Die Heißgasleitung kann weitere Öffnungen aufweisen und ist nicht auf eine bestimmte geometrische Form beschränkt. Insbesondere kann die Heißgasleitung eine Mehrzahl von Abschnitten umfassen, die zur Leitung des Heißgases miteinander verbunden sind. Die Heißgasleitung kann beispielsweise einen runden oder rechteckigen Strömungsquerschnitt für das Heißgas aufweisen.

Insbesondere kann die Heißgasleitung in ihrem Verlauf eine Mehrzahl bezüglich ihrer Form und/oder ihres Flächeninhalts unterschiedlicher Strömungsquerschnitte aufweisen, beispielsweise um eine Strömungsgeschwindigkeit des Heißgases einzustellen und/oder um eine möglichst platzsparende Bauweise zu erreichen. Vorzugsweise ist ein Flächeninhalt eines Strömungsquerschnitts der Heißgasleitung so gering gewählt, dass sich eine ausreichend hohe Strömungsgeschwindigkeit für einen turbulenten Heißgasstrom einstellt. Ein turbulenter Heißgasstrom bietet den Vorteil einer hohen Durchmischung des Heißgases, die zu einer gleichmäßigen Wärme- und Wasserdampfverteilung in dem Heißgas und somit zu einer gleichmäßigen Trocknung der Biomasse führt.

Vorteilhafterweise umschließt die Heißgasleitung den Biomassebehälter zumindest an einer Unterseite, einer Stirnseite und einer Oberseite des Biomassebehälters, sodass in einem gegebenen Bauraum eine möglichst große Übertragungsfläche für Wärme von dem Heißgas auf den Biomassebehälter und die Biomasse erreicht wird. Dadurch kann eine besonders hoher Anteil der in dem Heißgas enthaltenen Wärme zur Biomassetrocknung genutzt werden, und nur ein kleiner Teil der Wärme wird ungenutzt in eine Umgebung des Biomassetrockners abgegeben. Es ergibt sich also ein besonders hoher Wirkungsgrad der Biomassetrocknung.

Die Heißgasleitung kann geometrisch so ausgestaltet sein, dass sich im Betrieb des Biomassetrockners ein Kamineffekt einstellt, der eine Bewegung des Heißgases von der Einlassöffnung zur Auslassöffnung unterstützt. Dadurch kann vorteilhafterweise auf einen Heißgasantrieb verzichtet werden, sodass der Biomassetrockner besonders einfach aufgebaut sein und besonders energiesparend und wartungsarm betrieben werden kann.

Wenn der Biomassetrockner ausreichend energiesparend ausgelegt ist, kann er vorteilhafterweise ausschließlich mit einer normalen Haushaltsstromversorgung, also insbesondere nicht mit Mehrphasenwechselstrom, oder sogar vollständig ohne externe Energieversorgung betrieben werden. Eine Haushaltsstromversorgung, zum Beispiel mit einphasigem Wechselstrom, bietet zwar in der Regel einen geringeren Wirkungsgrad als Mehrphasenwechselstrom, dafür kann der Biomassetrockner aber, beispielsweise bezüglich des Spannungsschutzes, einfacher aufgebaut sein und einfacher an ein, beispielsweise am Einsatzort ohnehin verfügbares Haushaltsstromnetz angeschlossen werden.

Als Heißgasquelle, aus der das für den Betrieb des Biomassetrockner verwendete Heißgas bezogen wird, kann beispielsweise eine Anlage zur Gewinnung elektrischer und/oder kinetischer Energie durch Verbrennung eines Brennstoffs, beispielsweise ein Blockheizkraftwerk, dienen. Dabei wird vorzugsweise ein Abgasstrom der Anlage, zum Beispiel durch eine Umschaltklappe, als Heißgasstrom dem Biomassetrockner zugeführt, anstatt in eine Umgebung der Anlage zu entweichen. Dadurch wird die in dem Abgas enthaltene Wärme zur Trocknung der Biomasse genutzt, anstatt ungenutzt in die Umgebung abgegeben zu werden. Der Brennstoff kann Biomasse, insbesondere, beispielsweise in dem Biomassetrockner, getrocknete Biomasse, enthalten. Dadurch können die Anlage und der Biomassetrockner mit nachwachsenden Rohstoffen betrieben werden und dadurch besonders nachhaltig arbeiten.

Der Biomassetrockner kann einen Heißgasantrieb, beispielsweise einen Ventilator, ein Gebläse oder eine Turbine, zur Unterstützung eines Heißgasstromes durch die Heißgasleitung umfassen. Dadurch wird beispielsweise verhindert, dass an einem Abgasausgang der Anlage zur Gewinnung elektrischer oder kinetischer Energie ein für den Betrieb der Anlage zu hoher Druck entsteht. Zum Schutz des Heißgasantriebs vor Überhitzung ist der Heißgasantrieb vorteilhafterweise in einem dritten Abschnitt der Heißgasleitung angeordnet. Der dritte Abschnitt ist dabei einem zweiten Abschnitt der Heißgasleitung, der zum Gasaustausch mit dem Innenvolumen verbunden ist, in Strömungsrichtung des Heißgases nachgeordnet.

Der Biomassetrockner kann eine Frischluftzuführung umfassen, mit der dem Heißgas Frischluft aus einer Umgebung des Biomassetrockners zugeführt werden kann. Dadurch können vorteilhafterweise eine Temperatur und/oder ein Massenstrom des Heißgases eingestellt werden, beispielsweise wenn die Temperatur eines als Heißgases verwendeten Abgases zu hoch für einen sicheren Betrieb des Biomassetrockners ist.

Die Biomasse ist fließfähig, wobei die Biomasse insbesondere zumindest eine Flüssigkeit, eine Emulsion und/oder eine umfassen kann. Die Biomasse kann einen hohen Wassergehalt von beispielsweise über 80 %, insbesondere über 90 % oder sogar über 95 % aufweisen. Eine Biomasse mit hohem Wassergehalt ist beispielsweise Gülle oder Jauche. Beispielsweise kann durch die Verwendung der Anlage zur Trocknung von Gülle sichergestellt werden, dass der Stickstoff und andere Nährstoffe in dem getrockneten Güllerest verbleiben, sodass durch eine Trocknung kein Verlust an wichtigen Düngernährstoffen für mit dem Güllerest gedüngte Pflanzen erfolgt. Der Biomassetrockner kann eine Bindemittelzugabevorrichtung zur, insbesondere automatisierten, Zugabe eines chemischen Bindemittels für Nährstoffe, beispielsweise Stickstoff, umfassen. Dadurch werden die Nährstoffe vorteilhafterweise bei der Trocknung in der getrockneten Biomasse gebunden.

Weiterhin kann durch eine Trocknung von fließfähiger Biomasse deren Volumen erheblich verringert werden. Dieser Effekt ist bei fließfähiger Biomasse, insbesondere mit einem hohen Wassergehalt, deutlich größer als bei nicht fließfähiger Biomasse. Durch die Volumenverringerung werden beispielsweise Lagerung und Transport der Biomasse wesentlich kostengünstiger. Beispielsweise kann der Platz für die Lagerung eines Güllerests im Vergleich zur flüssigen Gülle verringert werden, und der Transport und die Ausbringung auf dem Feld können ebenfalls vereinfacht werden. Beispielsweise kann der Güllerest mit Hilfe eines Düngerstreuers auf dem Feld ausgetragen werden, anstatt eines Tankwagens wie bei flüssiger Gülle.

Ein erster Abschnitt der Heißgasleitung kann mit einer Außenseite des Biomassebehälters wärmeleitend verbunden sein. Dadurch kann Wärme von dem Heißgas zur Aufheizung der Biomasse auf den Biomassebehälter übertragen werden. Für eine effiziente Wärmeübertragung auf die Biomasse kann der Biomassebehälter zumindest abschnittsweise aus einem wärmeleitenden Material, beispielsweise einem Metall, insbesondere einem rostfreien Stahl, bestehen. Vorteilhafterweise ist zumindest ein Abschnitt eines Bodens des Biomassebehälters, insbesondere der gesamte Boden, mit dem ersten Abschnitt der Heißgasleitung wärmeleitend verbunden, sodass die Biomasse von unten erwärmt wird und durch die dadurch entstehende Konvektion durchmischt und gleichmäßig erwärmt wird.

Eine Begrenzungswand des ersten Abschnitts, die mit dem Biomassebehälter wärmeleitend verbunden ist, kann an ihrer dem Heißgas zugewandten Seite eine Anzahl von Vorsprüngen, zum Beispiel Rippen oder Lamellen, aufweisen. Dadurch wird die zur Wärmeübertragung von dem Heißgas über die Seitenwand auf den Biomassebehälter verfügbare Oberfläche erhöht, sodass der Biomasse in kurzer Zeit eine große Wärmemenge zugeführt werden kann.

Der erste Abschnitt kann zur Leitung des Heißgases entlang der Außenseite, insbesondere an einem Boden, des Biomassebehälters verlaufen. Dabei kann die Außenseite eine Begrenzungswand des ersten Abschnitts bilden, sodass das Heißgas direkt mit der Außenseite in Kontakt kommen kann. Dadurch wird eine besonders effiziente Wärmeübertragung erreicht. Weiterhin kann der erste Abschnitt zumindest ein Gasleitelement, zum Beispiel ein Gasleitblech oder eine Düse, umfassen. Mit Hilfe des Gasleitelements kann das Heißgas mehr oder weniger nah an der Außenseite entlang geführt werden, um den Wärmestrom vom Heißgas in den Biomassebehälter zu regulieren.

Die Heißgasleitung kann zumindest einen zweiten Abschnitt zur Leitung des Heißgases in einer horizontalen Richtung umfassen, wobei der zweite Abschnitt oberhalb des Biomassebehälters angeordnet und mit dem Innenvolumen des Biomassebehälters zum Gasaustausch verbunden ist. Durch diese Anordnung des zweiten Abschnitts kann das Heißgas aus der Biomasse verdampftes Wasser aufnehmen und abführen. Dadurch, dass der zweite Abschnitt zur Leitung des Heißgases in horizontaler Richtung, und nicht von oben in das Innenvolumen hinein, ausgelegt ist, kann der zweite Abschnitt besonders einfach aufgebaut sein. Ferner wird dadurch, dass das Heißgas nicht direkt auf die Biomasse gelenkt wird, eine ungleichmäßige Erhitzung der Biomasse vermieden. Im einfachsten Fall kann der zweite Abschnitt einen quaderförmigen, an seiner dem Biomassebehälter zugewandten Unterseite offenen Strömungskanal umfassen.

Vorteilhafterweise ist der zweite Abschnitt dem ersten Abschnitt in Strömungsrichtung des Heißgases nachgeordnet. Dadurch kann bei einer möglichst hohen Heißgastemperatur, also bei einer hohen Übertragungseffizienz, im ersten Abschnitt Wärme an die Biomasse übertragen werden, bevor das Heißgas im weiteren Verlauf der Heißgasleitung abkühlt.

Der erste und der zweite Abschnitt können durch einen Übergangsabschnitt zur im Wesentlichen vertikalen Leitung des Heißgases von dem ersten Abschnitt in den zweiten Abschnitt verbunden sind. Vorteilhafterweise ist der Übergangsabschnitt bezüglich eines Materialaustauschs von dem Innenvolumen getrennt, um eine Verunreinigung des Heißgases durch die Biomasse, insbesondre mit umweltgefährdenden und/oder übelriechenden Bestandteilen der Biomasse zu vermeiden. Daraus ergibt sich der besondere Vorteil, dass das Heißgas mit einer weniger aufwändigen oder sogar ganz ohne Abgasreinigung in eine Umgebung des Biomassetrockners entlassen werden kann, sodass der Biomassetrockner einfache aufgebaut sein und kostengünstiger betrieben werden kann. Der Übergangsabschnitt kann wärmeleitend mit dem Biomassebehälter verbunden sein, um den Biomassebehälter zusätzlich aufzuheizen. Der Übergangsabschnitt ist vorteilhafterweise, insbesondere in seinen Verbindungsbereichen zum ersten und zweiten Abschnitt für einen geringen Strömungswiderstand für das Heißgas ausgelegt, beispielsweise durch einen ausreichend großen Strömungsquerschnitt und/oder ausreichend große Krümmungsradien.

Erfindungsgemäß umfasst der Biomassetrockner ein Transportmittel zum Transport der Biomasse aus einem unteren Bereich des Innenvolumens des Biomassebehälters in einen oberen Bereich des Innenvolumens, der mit einem zweiten Abschnitt der Heißgasleitung zum Gasaustausch verbunden ist. Durch das Transportmittel kann die Biomasse in die Nähe des Heißgasstroms transportiert werden. Die Biomasse kann von dem Transportmittel und/oder gravitationsgetrieben in den unteren Bereich zurückkehren, beispielsweise indem die Biomasse von dem Transportmittel herabfällt, herabläuft und/oder herabrutscht. Durch das Transportmittel kann ein direkter Kontakt zwischen der Biomasse und dem Heißgas hergestellt werden, sodass die Biomasse zusätzliche Wärme aus dem Heißgas aufnehmen kann. Dadurch wird die Biomasse besonders effizient erhitzt, und darin enthaltenes Wasser wird besonders effizient verdampft und aus der Biomasse abgeführt. Vorteilhafterweise wird die Biomasse in dem oberen Bereich entgegen einer Strömungsrichtung des Heißgases transportiert, um im Gegenstromprinzip einen hohen Wärme- und Wasseraustausch zwischen der Biomasse und dem Heißgas zu gewährleisten. Weiterhin kann das Transportmittel die Biomasse durchmischen, sodass sie gleichmäßig getrocknet wird.

Das Transportmittel kann zumindest einen siebartigen und/oder gitterartigen Abschnitt umfassen. An einem siebartigen oder gitterartigen Abschnitt anhaftende Biomasse weist eine besonders große Oberfläche auf, die eine effiziente Wärme- und Wasserübertragung zwischen dem Heißgas und der Biomasse erlaubt. Das Transportmittel kann beispielsweise eine Förderkettenvorrichtung und/oder eine Förderbandvorrichtung umfassen.

Das Transportmittel kann eine Anzahl von Abstreifmitteln zum Abstreifen der Biomasse von einer Innenfläche des Biomassebehälters umfassen. Wenn die Biomasse von einer Außenseite des Biomassebehälters her aufgeheizt wird, kann es passieren, dass die Biomasse an einer Innenfläche, die das Innenvolumen des Biomassebehälters begrenzt, durch Wärmeeinwirkung anhaftet. Dadurch kann sich auf der Innenfläche eine anhaftende Biomasseschicht bilden, die die Wärmeübertragung von dem Biomassebehälter auf die Biomasse behindern kann. Weiterhin erschwert die Biomasseschicht die Entleerung und Reinigung des Biomassebehälters. Durch Abstreifmittel, beispielsweise von der Transportvorrichtung an der Innenfläche entlanggeführte Rakel, wird die Bildung einer Biomasseschicht an der Innenfläche verhindert, Für ein wirksames Abstreifen weist das Transportmittel vorteilhafterweise eine Vielzahl von Abstreifmitteln auf. Zumindest eines der Abstreifmittel kann eine Vertiefung zur Aufnahme von Biomasse aufweisen. Durch die Vertiefung kann das Abstreifmittel zusätzlich als Schöpfmittel dienen, um die, insbesondere flüssige, Biomasse wirksam zu transportieren. Durch die Kombination von Abstreif- und Schöpffunktion in einem Abstreifmittel kann die Transportvorrichtung besonders einfach aufgebaut sein; das trifft insbesondere dann zu, wenn alle Abstreifmittel der Transportvorrichtung jeweils eine Vertiefung aufweisen und insbesondere gleichartig aufgebaut sind.

Der Biomassetrockner kann zumindest einen Verteiler zur gleichmäßigen Verteilung eines Heißgasmassenstroms über eine Querschnittsfläche der Heißgasleitung aufweisen, wobei der Verteiler eine Anzahl von Austrittsflächen für das Heißgas, die zusammen die Querschnittsfläche überdecken, aufweist. Der Verteiler kann beispielswese zumindest eine Eintrittsfläche, durch die das Heißgas in den Verteiler eintreten kann, und eine Mehrzahl von, beispielsweise drei oder sechs, nebeneinander angeordneten Austrittsflächen, durch die das Heißgas aus dem Verteiler austreten und durch die Querschnittsfläche in den weiteren Verlauf der Heißgasleitung eintreten kann, umfassen. Beispielsweise durch Gasleitbleche, Einschübe, Ventile und/oder Drosselklappen kann das Heißgas kontrolliert auf die Austrittsflächen verteilt werden, sodass eine gleichmäßige Massenstromverteilung über die Querschnittsfläche erreicht wird. Eine gleichmäßige Massenstromverteilung sorgt für eine gleichmäßige Wärmeübertragung von dem Heißgas auf den Biomassebehälter und die Biomasse sowie eine gleichmäßige Abführung von Wasser aus der Biomasse, sodass eine gleichmäßige Trocknung der Biomasse erreicht wird.

Erfindungsgemäß kann der Verteiler auch zur Zusammenführung einer Massenstromdichte aus einer Mehrzahl von, beispielsweise drei, nebeneinander angeordneten Austrittsflächen aus einem dem Verteiler in Strömungsrichtung vorgeordneten Abschnitt der Heißgasleitung zu einer Eintrittsöffnung in einen dem Verteiler in Strömungsrichtung nachgeordneten Abschnitt der Heißgasleitung ausgelegt sein, wobei der Massenstrom durch die Austrittsflächen gleichmäßig über die Austrittsflächen verteilt ist.

Vorteilhafterweise kann jeweils ein Verteiler in Strömungsrichtung des Heißgases am Anfang des ersten Abschnitts, am Anfang eines zweiten Abschnitts, der mit dem Innenvolumen des Biomassebehälters zum Gasaustausch verbunden ist, und/oder am Ende des zweiten Abschnitts der Heißgasleitung angeordnet sein. Dadurch kann vorteilhafterweise eine gleichmäßige Massenstromdichteverteilung im Bereich der Wärmeübertragung von dem Heißgas auf den Biomassebehälter und/oder im Bereich der Wärme- und/oder Wasserübertragung zwischen dem Heißgas und der Biomasse sichergestellt werden.

Orthogonal zu einer Strömungsrichtung des Heißgases können in Strömungsrichtung vor einer Austrittsfläche des Verteilers zumindest ein erstes flächiges Regulierungselement und ein weiteres flächiges Regulierungselement angeordnet sein. Ein flächiges Regulierungselement besitzt eine erste Ausdehnung und eine dazu orthogonale zweite Ausdehnung in einer Regulierungselementebene sowie eine dritte Ausdehnung orthogonal zu der Regulierungselementebene, wobei die erste und die zweite Ausdehnung jeweils wesentlich größer sind als die dritte Ausdehnung. Ein flächiges Regulierungselement ist genau dann orthogonal zu der Strömungsfläche angeordnet, wenn seine Regulierungselementebene orthogonal zur Strömungsrichtung liegt. Für eine kompakte Bauform sind das erste und das weitere Regulierungselement vorteilhafterweise aneinander anliegend und/oder möglichst nah an der Austrittsfläche angeordnet.

Zumindest eines der Regulierungselemente ist in zumindest einer Richtung orthogonal zu der Strömungsrichtung verschiebbar, und die Regulierungselemente weisen jeweils eine Anzahl von Öffnungen auf, wobei korrespondierende Öffnungen der Regulierungselemente in Strömungsrichtung des Heißgases hintereinander anordenbar sind. Insbesondere können die Regulierungselemente jeweils eine Vielzahl von, bevorzugt gleichmäßig verteilten, Öffnungen, beispielsweise in Form eines Lochblechs, aufweisen. Durch Verschieben der Regulierungselemente gegeneinander können die Öffnungen mehr oder weniger hintereinander angeordnet werden, um einen Massenstrom des Heißgases durch die Austrittsfläche zu regulieren. Insbesondere wenn die Öffnungen gleichmäßig verteilt sind, kann eine über die Auslassfläche gleichmäßigen Regulierung eines Massenstroms des Heißgases durch die Auslassfläche erreicht werden. Auf diese Weise kann eine gleichmäßige Verteilung einer Massenstromdichte des Heißgases über eine Querschnittsfläche der Heißgasleitung mit den vorgenannten Vorteilen sichergestellt werden.

Die Anzahl, Größe, Form und/oder Anordnung der Öffnungen kann, beispielsweise für einen bestimmten Maximalmassenstrom, für eine bestimmte Massenstromdichteverteilung oder für eine bestimmte Abhängigkeit des Massenstroms und/oder der Massenstromdichteverteilung von einem Verschiebeweg eines Regulierungselements, angepasst sein.

Der Biomassetrockner kann eine Anzahl von Sensoren zur Überwachung eines Wassergehalts der Biomasse umfassen. Zumindest einer der Sensoren ist ausgewählt aus einem Füllstandssensor zur Messung eines Füllstands des Biomassebehälters, einem Drucksensor zur Messung eines Gewichts des Biomassebehälters und einem Drehmomentsensor zur Messung eines Antriebsdrehmoments eines Transportmittels für die Biomasse. Eine Überwachung des Wassergehalts ist vorteilhaft, um einen Trocknungsvorgang, insbesondere ohne eine Unterbrechung des Trocknungsvorgangs oder eine aufwändige Probennahme, bei Erreichen eines vorbestimmten Wassergehalts zu beenden. So kann Biomasse mit einem kontrollierten Wassergehalt produziert werden, der zur Weiterverwendung der Biomasse, beispielsweise als Dünger oder als Brennstoff, besonders vorteilhaft ist. Insbesondere wird ein "Übertrocknen" der Biomasse, das zu einer Zerstörung darin enthaltener Nährstoffe und/oder einem unnötig hohen Zeit- und/oder Energieverbrauch für die Trocknung führen kann, verhindert.

Mit dem Füllstandssensor können das Volumen und die Volumenabnahme durch Wasserverlust der Biomasse in dem Biomassebehälter bestimmt werden, um daraus, insbesondere in Verbindung mit einem Anfangs-Wassergehalt der Biomasse, den Wassergehalt der Biomasse zu berechnen. Vorteilhafterweise ist der Füllstandssensor zur kontaktlosen Messung, beispielsweise als Ultraschallsensor, ausgelegt. Dadurch wird eine Verschmutzung des Sensors, die die Messergebnisse verfälschen könnte, vermieden.

Mit dem Gewichtssensor, beispielsweise einem an einem Stützelement des Biomassebehälters angebrachten Drucksensor, können des Gewicht und die Gewichtsabnahme durch Wasserverlust der Biomasse in dem Biomassebehälter bestimmt werden. Daraus kann, insbesondere in Verbindung mit einem Anfangs-Wassergehalt der Biomasse, der Wassergehalt der Biomasse berechnet werden.

Die Viskosität der Biomasse hängt von ihrem Wassergehalt ab und nimmt bei fließfähiger Biomasse in der Regel mit abnehmendem Wassergehalt zu. Folglich hängen auch der Bewegungswiderstand und damit das Antriebsdrehmoment einer durch die Biomasse bewegten Transportvorrichtung von dem Wassergehalt der Biomasse ab. Der genaue Zusammenhang für die zu trocknende Biomasse kann durch Kalibrierung, Berechnung und/oder Simulation ermittelt werden, sodass aus dem Antriebsdrehmoment der Wassergehalt bestimmt werden kann.

Der Biomassetrockner kann zumindest einen Temperatursensor zur Messung einer Temperatur der Biomasse und/oder des Heißgases nach Kontakt mit der Biomasse und/oder einen Feuchtigkeitssensor zur Messung eines Feuchtigkeitsgehaltes des Heißgases nach Kontakt mit der Biomasse umfassen. Der Temperatursensor ist vorteilhafterweise zur kontaktlosen Messung der Temperatur der Biomasse ausgelegt, sodass der Temperatursensor nicht durch die Biomasse verschmutzt wird. Dazu kann der Temperatursensor beispielsweise einen Infrarotsensor umfassen oder in einer Tauchhülse in dem Biomassebehälter angeordnet sein. Die Temperatur der Biomasse und/oder des Heißgases und/oder der Feuchtigkeitsgehalt des Heißgases können wie in der DE 10 2014 011 646 A1 beschrieben zur Bestimmung des Wassergehalts der Biomasse verwendet werden.

Der Biomassetrockner kann zumindest einen Drucksensor zur Messung eines Drucks des Heißgases in zumindest einem Abschnitt der Heißgasleitung umfassen. Der Drucksensor kann beispielsweise einen Differenzdrucksensor zur Messung eines dynamischen Drucks des Heißgases umfassen. Aus dem dynamischen Druck kann beispielsweise eine Massenstromdichte des Heißgases und bei bekannter Querschnittsfläche der Heißgasleitung ein Massenstrom des Heißgases berechnet und überwacht werden.

Der Biomassetrockner kann zumindest einen chemischen Sensor zur Messung einer Konzentration eines Bestandteils des Heißgases umfassen. Der chemische Sensor kann insbesondere zur Konzentrationsmessung eines geruchsbelästigenden und/oder umweltbelastenden Gases und/oder Aerosols, beispielsweise Ammoniak oder Schwefelwasserstoff, ausgelegt sein. Bei der Trocknung von, insbesondere fließfähiger, Biomasse können potentiell gefährliche, geruchsbelästigende und/oder umweltbelastende Stoffe frei werden, deren Konzentrationen zum Schutz einer Umgebung des Biomassetrockners festgelegte Grenzwerte nicht überschreiten dürfen. Daher ist eine Konzentrationsmessung der Stoffe mit entsprechenden Sensoren vorteilhaft, um bei einer zu hohen Konzentration Gegenmaßnahmen, wie eine Unterbrechung eines Trocknungsvorgangs, einleiten zu können.

Der Biomassetrockner kann eine Hubvorrichtung zur zumindest einseitigen Höhenverstellung des Biomassebehälters umfassen. Die Hubvorrichtung kann beispielsweise zumindest einen hydraulischen und/oder elektrischen Antrieb umfassen. Durch die Hubvorrichtung kann der Biomassebehälter beispielsweise so gekippt werden, dass sich die Biomasse in der Nähe einer Entleerungsöffnung, die sich zum Beispiel in einer Stirnwand des Biomassebehälters befindet, sammelt. Dadurch kann die Biomasse, insbesondere mit Hilfe einer Transportvorrichtung durch die Entleerungsöffnung aus dem Biomassebehälter entfernt werden. Weiterhin kann durch eine Höhenverstellung des Biomassebehälters ein Abstand zwischen einem Heißgasstrom und dem Biomassebehälter eingestellt werden, um eine Wärme- und/oder Wasserübertragung zwischen dem Heißgas und der Biomasse zu regulieren.

Der Biomassetrockner kann ein den Biomassebehälter und zumindest den ersten und den zweiten Abschnitt der Heißgasleitung im Wesentlichen vollständig umschließendes Gehäuse umfassen. Durch das, vorteilhafterweise wärmeisolierende, Gehäuse können ein Wärmeverlust und/oder eine Abgabe von umweltgefährdenden oder belästigenden Emissionen an eine Umgebung des Biomassetrockners minimiert werden. Weiterhin bietet ein Gehäuse Schutz für den Biomassetrockner, insbesondere vor Witterungseinflüssen, Manipulation und/oder Vandalismus.

Der Biomassetrockner kann ein Befüllmodul zur Befüllung des Biomassebehälters mit Biomasse umfassen. Das Befüllmodul kann beispielsweise eine in den Biomassebehälter mündende Biomassezuleitung, ein Ventil, und/oder ein Fördermittel für die Biomasse, zum Beispiel eine Pumpe, eine Förderschraube und/oder ein Förderband, umfassen. Durch das Befüllmodul kann die Biomasse schnell, einfach und insbesondere automatisch in den Biomassebehälter gebracht werden, sodass der Biomassetrockner effizient betrieben werden kann.

Der Biomassetrockner kann eine Steuervorrichtung zur Steuerung, Regelung, Überwachung und/oder Dokumentation des Betriebs des Biomassetrockners umfassen. Durch eine Steuervorrichtung, beispielsweise eine speicherprogrammierbare Steuerung, kann der Biomassetrockner automatisiert betrieben werden, um einen zuverlässigen und effizienten Betrieb des Biomassetrockners zu garantieren. Insbesondere kann die Steuervorrichtung zur automatisierten Steuerung und/oder Regelung einer Heißgaszufuhr, eines Transportmittels, eines Befüllmoduls und/oder einer Fällungsvorrichtung ausgelegt sein.

Die Steuervorrichtung kann ein Kommunikationsmodul, beispielsweise ein Mobilfunkmodul, zur Fernsteuerung, Fernwartung und/oder Fernüberwachung der Steuervorrichtung, beispielsweise über das Internet, umfassen. Durch das Kommunikationsmodul kann der Biomassetrockner besonders effizient, insbesondere ohne dass sich eine Person an seinen Einsatzort begeben muss, gesteuert, gewartet und/oder überwacht werden.

Der Biomassetrockner kann zumindest eine Sicherheitsvorrichtung umfassen, die ausgewählt ist aus einer Druckentlastungsklappe in einem Gehäuse des Biomassetrockners; einer Fällungsvorrichtung zur Ausfällung potentiell gefährlicher Bestandteile aus der Biomasse und einer Abgasreinigungsvorrichtung zur Entfernung geruchsbelästigender und/oder umweltbelastender Bestandteile aus dem Heißgas. Durch die Sicherheitsvorrichtung wird ein sicherer Betrieb des Biomassetrockners gewährleistet. Für einen möglichst einfachen Aufbau ist der Biomassetrockner vorteilhafterweise nicht explosionsfest ausgebildet. Eine explosionsfeste Auslegung ist in der Regel nicht notwendig, da zum einen potentiell gefährliche Bestandteile, wie beispielsweise Ammoniak oder Schwefelwasserstoff, in durch Biogasanlagen genutzter Biomasse nur in geringen Mengen enthalten sein dürfen, und zum anderen potentiell gefährliche Bestandteile vorteilhafterweise durch eine Fällungsvorrichtung schon vor dem Eintritt in den Biomassebehälter ausgefällt werden können.

Die Fällungsvorrichtung kann beispielsweise zur Ausfällung von Ammoniak und/oder Schwefelwasserstoff durch Zugabe eines Fällungsmittels, insbesondere Eisen(III)-Chloridsulfat, ausgelegt sein. Das Fällungsmittel wird vorzugsweise als konzentrierte wässrige Lösung, insbesondere mit einer Konzentration von 40 % bis 45 %, zugegeben, um den Wassergehalt der Biomasse nicht übermäßig zu erhöhen. Die Fällungsvorrichtung ist vorzugsweise an einer Biomassezuleitung, durch die die Biomasse in den Biomassebehälter geleitet wird, angeordnet. Dadurch können potentiell gefährliche Bestandteile möglichst früh, insbesondere noch vor Beginn eines Trocknungsvorgangs der Biomasse, aus der Biomasse gefällt werden.

Insbesondere kann die Fällungsvorrichtung einen Flockulator, beispielsweise einen Röhrenflockulator, durch den die Biomasse nach Zugabe eines Fällungsmittels in den Biomassebehälter geleitet wird, umfassen. Zur Steuerung einer Fällungsreaktion kann die Fällungsvorrichtung ein Zugabemittel für eine Polymerlösung zu der Biomasse und/oder ein Einstellmittel für einen pH-Wert der Biomasse umfassen. Das Einstellmittel kann beispielsweise eine pH-Sonde und eine Zugabevorrichtung für eine Säure und/oder eine Base zu der Biomasse umfassen. Die Fällungsvorrichtung ist vorteilhafterweise so ausgelegt, dass ein Aufschäumen der Biomasse vermieden wird, da eine aufgeschäumte Biomasse nur schwer weitertransportiert und getrocknet werden kann.

Die Abgasreinigungsvorrichtung kann beispielsweise einen Fliehkraftabscheider und/oder einen Filter umfassen. Aufgrund der in DE 102014011646 A1 dargelegten Vorteile umfasst die Abgasreinigungsvorrichtung vorzugsweise einen Abluftwäscher. Die Abgasreinigungsvorrichtung ist vorteilhafterweise in einem dritten Abschnitt der Heißgasleitung angeordnet. Der dritte Abschnitt ist dabei einem zweiten Abschnitt der Heißgasleitung, der zum Gasaustausch mit dem Innenvolumen verbunden ist, in Strömungsrichtung des Heißgases nachgeordnet.

Der Biomassetrockner kann eine Bewegungsvorrichtung zum Transport des Biomassetrockners umfassen. Durch die Bewegungsvorrichtung kann der Biomassetrockner bedarfsgerecht dorthin transportiert werden, wo zu trocknende Biomasse anfällt, sodass unnötige Transporte ungetrockneter Biomasse, die ein wesentlich größeres Volumen und eine wesentlich größere Masse als getrocknete Biomasse aufweist, entfallen. Weiterhin kann ein Biomassetrockner im Fall einer Fehlfunktion schnell gegen einen anderen Biomassetrockner ausgetauscht werden. Außerdem können an einer Biomassequelle, beispielsweise einem Mastbetrieb, je nach Bedarf schnell ein oder mehrere Biomassetrockner installiert werden.

In einem Verbund aus einer Mehrzahl von, beispielsweise zwei, drei oder vier, Biomassetrocknern können bestimmte Komponenten der Biomassetrockner, beispielsweise eine Fällungsvorrichtung, eine Abgasreinigungsvorrichtung und/oder eine Steuervorrichtung, jeweils von mehreren, insbesondere allen, Biomassetrocknern genutzt werden. Dadurch kann der Verbund besonders schnell und kostengünstig aufgebaut und besonders effizient betrieben werden.

Die Bewegungsvorrichtung kann eine zumindest den Biomassebehälter sowie den ersten Abschnitt und den zweiten Abschnitt der Heißgasleitung umschließende, transportable Einhausung umfassen. Durch die Einhausung, die beispielsweise auch eine Steuervorrichtung, ein Befüllmodul und/oder eine Fällungsvorrichtung des Biomassetrockners umschließen kann, wird der Biomassetrockner, insbesondere während eines Transports, beispielsweise vor Witterungseinflüssen und/oder Manipulation geschützt.

In einer besonders vorteilhaften Ausgestaltung umschließt die Einhausung in einem ersten Einhausungsteil den Biomassebehälter und die Heißgasleitung, in einem zweiten Einhausungsteil eine Fällungsvorrichtung und ein Befüllmodul sowie in einem dritten Einhausungsteil eine Steuervorrichtung. Eine Abgasreinigungsvorrichtung ist vorteilhafterweise außerhalb der Einhausung angeordnet. Die in den einzelnen Einhausungsteilen angeordneten Komponenten und die Abgasreinigungsvorrichtung können vorteilhafterweis modular miteinander kombiniert werden.

Die Einhausung kann einen verstärkten Dachbereich oberhalb des Biomassetrockners zur Aufnahme zumindest eines Behälters für zu trocknende Biomasse und/oder für Verbrauchsmittel einer Fällungsvorrichtung und/oder einer Abgasreinigungsvorrichtung umfassen. In einem auf einem verstärkten Dachbereich angeordneten Behälter können die Biomasse und/oder die Verbrauchsmittel, beispielsweise Wasser und/oder Eisen(III)-Chloridsulfat-Lösung, platzsparend gelagert werden und außerdem ohne Antriebsvorrichtung, rein gravitationsgetrieben dem Biomassetrockner zugeführt werden.

Die Bewegungsvorrichtung kann ein Lademittel, beispielsweise ein Schienensystem und/oder eine Rampe, zum Be- und/oder Entladen des Biomassetrockners in die Einhausung hinein beziehungsweise aus der Einhausung heraus umfassen. Das Lademittel kann vorteilhafterweise von der Einhausung trennbar sein, sodass es von der Einhausung getrennt werden kann, um ein unberechtigtes Entladen zu vermeiden.

Die Einhausung kann einen ISO-Container, beispielsweise einen 40-Fuß-Container, umfassen. Ein ISO-Container kann aufgrund seiner standardisierten Maße besonders einfach und kostengünstig, beispielsweise mit Schiffen, Eisenbahnen oder Lastwagen, transportiert werden.

Der Biomassetrockner kann eine autarke Energieversorgung zur Versorgung des Biomassetrockners mit Energie umfassen. Durch die autarke Energieversorgung kann der Biomassetrockner vorteilhafterweise unabhängig von einem Energieversorgungsnetz betrieben werden. Die Energieversorgung kann zumindest ein Umwandlungsmittel zur Umwandlung von Sonnenenergie und/oder Windenergie in elektrische Energie, beispielsweise ein Photovoltaik-Modul oder einen Windgenerator, und/oder einen Energiespeicher, beispielsweise einen Akkumulator umfassen. Vorteilhafterweise können die Umwandlungsmittel auf einem Dach eines Gehäuses oder einer Einhausung des Biomassetrockners angeordnet sein, um eine möglichst große Sonneneinstrahlung beziehungsweise Windgeschwindigkeit nutzen zu können.

Ein erfindungsgemäßes Verfahren zum Trocknen von Biomasse in einem, insbesondere erfindungsgemäßen Biomassetrockner umfasst ein Aufheizen eines die Biomasse enthaltenden Biomassebehälters durch ein Heißgas von einer Außenseite des Biomassebehälters, insbesondere eines Bodens des Biomassebehälters, aus. Vorteilhafterweise wird dabei das Heißgas durch eine Heißgasleitung, insbesondere gleichmäßig, an der Außenseite des Biomassebehälters entlanggeführt.

Das Verfahren kann ein Vorbeiströmen des Heißgases an einer offenen Oberseite des Biomassebehälters umfassen. Vorteilhafterweise wird dabei das Heißgas in horizontaler Richtung in einer Heißgasleitung, die zum Gasaustausch mit einem Innenvolumen des Biomassebehälters verbunden ist, geführt. Mit dem Vorbeiströmen kann ein Transportieren zumindest eines Teils der Biomasse durch ein Transportmittel auf das vorbeiströmende Heißgas zu erfolgen. Dabei wird die Biomasse zumindest vorübergehend an den Heißgasstrom heran und/oder dem Heißgasstrom entgegen transportiert.

Das Verfahren kann ein Ermitteln eines Wassergehalts der Biomasse umfassen, wobei das Ermitteln das Messen zumindest einer physikalischen Eigenschaft der Biomasse, ausgewählt aus dem Volumen, der Masse und der Viskosität der Biomasse, umfasst. Das Ermitteln des Wassergehalts kann insbesondere indirekt und ohne Messung einer Temperatur der Biomasse oder des Heißgases erfolgen. Aufgrund der hohen Temperaturen und des oftmals chemisch aggressiven Charakters der Biomasse sind zuverlässige Temperaturmessungen und direkte Messungen des Wassergehalts in der Biomasse schwierig umzusetzen. Daher ist es vorteilhaft, den Wassergehalt ohne solche Messungen zu bestimmen.

Das Ermitteln erfolgt vorteilhafterweise regelmäßig oder kontinuierlich, um die Abnahme des Wassergehalts während des Trocknens genau verfolgen zu können.

Das Trocknen kann bei Erreichen eines vorbestimmten Wassergehalts der Biomasse beendet werden, um getrocknete Biomasse mit einem für die weitere Verwendung optimalen Wassergehalt zu erhalten. Zum Beenden wird beispielsweise ein Einleiten von Heißgas in den Biomassetrockner unterbrochen, um eine Wärmezufuhr zu der Biomasse zu unterbrechen. Das Unterbrechen erfolgt vorteilhafterweise durch ein Verschließen einer Heißgasleitung, beispielsweise mit einem Einschub oder zumindest einem, insbesondere erfindungsgemäßen, Regulierungselement.

Insbesondere nach dem Beenden kann ein Entleeren der Biomasse aus dem Biomassebehälter erfolgen. Das Entleeren kann beispielsweise erfolgen, indem die Biomasse durch ein Kippen des Biomassebehälters und/oder durch ein Transportmittel durch eine Entleerungsöffnung aus dem Biomassebehälter befördert wird.

Das Trocknungsverfahren kann ein Befüllen des Biomassebehälters mit Biomasse umfassen. Das Befüllen kann beispielsweise erfolgen, indem die Biomasse durch eine Biomassezuleitung in den Biomassebehälter fließt. Dabei kann der Fluss der Biomasse beispielsweise durch ein Gefälle des Füllrohres, durch eine Pumpe und/oder durch eine Förderschnecke angetrieben und/oder durch ein Ventil gesteuert sein.

Das Verfahren kann ein Überwachen des Verfahrens umfassen, wobei das Überwachen ein Messen zumindest eines der folgenden Sicherheitsparameter des Verfahrens umfasst:
a) eine Eingangstemperatur des in den Biomassetrockner eintretenden Heißgases;
b) eine Biomassetemperatur der Biomasse;
   ein Bewegungszustand eines Transportmittels für die Biomasse;
c) ein Füllstand des Biomassebehälters;
d) ein Füllstand eines Abluftwäschers zur Entfernung geruchsbelästigender und/oder umweltbelastender Bestandteile des Heißgases und
e) eine Konzentration eines potentiell gefährlichen, geruchsbelästigenden und/oder umweltbelastenden Bestandteils in dem Heißgas.

Die Eingangstemperatur ist sicherheitsrelevant, da eine zu hohe Eingangstemperatur den Biomassetrockner beschädigen und/oder zu einem zu starken Erhitzen der Biomasse führen kann. Der Bewegungszustand, also die Antwort auf die Frage, ob und/oder mit welcher Geschwindigkeit sich das Transportmittel bewegt, kann beispielsweise durch eine Lichtschranke gemessen werden. Kommt das Transportmittel während eines Trocknungsvorgangs zum Stillstand kann dadurch eine unzureichende Durchmischung der Biomasse und in der Folge eine lokal zu starke Erhitzung der Biomasse verursacht werden. Auch ein zu geringer Füllstand des Biomassebehälters kann eine zu starke Erhitzung der Biomasse verursachen.

Eine zu hohe Biomassetemperatur kann zu unerwünschten chemischen Reaktionen, beispielsweise einer Verbrennung von Bestandteilen der Biomasse, führen. Wird eine zu hohe Biomassetemperatur gemessen und/oder aufgrund der Messung eines der vorgenannten Sicherheitsparameter erwartet, kann beispielsweise die Zufuhr von Heißgas in den Biomassetrockner unterbrochen oder reduziert und/oder die Eingangstemperatur durch ein Zumischen von Frischluft aus einer Umgebung des Biomassetrockners gesenkt werden. Die Zufuhr kann zum Beispiel durch eine Umschaltklappe, die das Heißgas von einer Heißgasquelle zu dem Biomassetrockner oder in eine Umgebung des Biomassetrockners leitet, unterbrochen und/oder reguliert werden. Das Zumischen von Frischluft kann zum Beispiel nach dem Venturi-Prinzip über eine Frischluftzuleitung erfolgen, die über ein regelbares Ventil mit einer Heißgaszuleitung, durch die das Heißgas von der Heißgasquelle in den Biomassetrockner strömt, verbunden ist. Zusätzlich kann die Abführung überschüssiger Wärme durch ein Erhöhen eines Heißgasmassenstroms, beispielsweise mit Hilfe eines Heißgasantriebs, unterstützt werden.

Liegt der Füllstand des Abluftwäschers nicht in einem vorgegebenen Bereich, ist die Entfernung geruchsbelästigender und/oder umweltbelastender Bestandteile aus dem Heißgas nicht sichergestellt. Zum Schutz der Umwelt des Biomassetrockners vor Geruchsbelästigungen und Gefahren kann ein Trocknungsvorgang unterbrochen werden, wenn der Füllstand des Abluftwäschers nicht im vorgegebenen Bereich liegt.

Übersteigt eine Konzentration eines potentiell gefährlichen Bestandteils und/oder eines geruchsbelästigenden und/oder umweltgefährdenden Bestandteils einen festgelegten Grenzwert, entstehen dadurch Gefahren für den Biomassetrockner und seine Umwelt. Die Konzentration wird vorteilhafterweise in Strömungsrichtung des Heißgases nach einer Abgasreinigungsvorrichtung zur Entfernung geruchsbelästigender und/oder umweltbelastender Bestandteile aus dem Heißgas bestimmt. Zur Reduzierung der Konzentration kann beispielsweise die Biomassetemperatur wie oben erläutert gesenkt werden. Bei einer verringerten Biomassetemperatur ist auch die Abgabegeschwindigkeit von potentiell gefährlichen, geruchsbelästigenden und/oder umweltgefährdenden Stoffen aus der Biomasse verringert. Ferner kann die Konzentration durch ein Anpassen von Betriebsparametern der Abgasreinigungsvorrichtung und/oder der Fällungsvorrichtung verringert werden. Weiterhin kann die Konzentration durch ein Erhöhen eines Heißgasmassenstroms verringert werden.

Das Verfahren kann ein Feststellen eines Wärmeverbrauchs des Biomassetrockners umfassen, wobei das Feststellen ein Messen zumindest einer der folgenden physikalischen Eigenschaften des Heißgases umfasst:
a) eine Eingangstemperatur und ein Eingangsmassenstrom des in den Biomassetrockner eintretenden Heißgases sowie
b) eine Ausgangstemperatur und ein Ausgangsmassenstrom des aus dem Biomassetrockner austretenden Heißgases.

Der Eingangsmassenstrom und der Ausgangsmassenstrom können beispielsweise durch Messen jeweils eines dynamischen Drucks, insbesondere mit Hilfe von Differenzdrucksensoren, bei bekanntem Strömungsquerschnitt einer Heißgasleitung für das Heißgas am Ort der Druckmessung bestimmt werden. Vorzugsweise findet das Messen eines dynamischen Drucks jeweils an einer Messblende statt, die einen bekannten Strömungsquerschnitt der Heißgasleitung definiert. Bei bekannter oder sinnvoll geschätzter Zusammensetzung des Heißgases kann aus Eingangsmassenstrom und Eingangstemperatur ein von dem Biomassetrockner aufgenommener Wärmestrom berechnet werden. Entsprechend lässt sich aus Ausgangstemperatur und Ausgangsmassenstrom ein von dem Biomassetrockner abgegebener Wärmestrom berechnet. Die Differenz von aufgenommenem und abgegebenem Wärmestrom ist die pro Zeiteinheit verbrauchte Wärmemenge; wird diese beispielsweise über eine Dauer eines Trocknungsvorgangs integriert ergibt sich der Wärmeverbrauch für den Trocknungsvorgang. Mit Hilfe des Wärmeverbrauchs kann die Effizienz des Trocknungsvorgangs überwacht werden, beispielsweise um die Wirksamkeit von Optimierungsmaßnahmen an dem Verfahren oder dem Biomassetrockner zu überprüfen.

Das Verfahren kann ein Optimieren eines Strömungsverhaltens des Heißgases in dem Biomassetrockner für eine gleichmäßige Massenstromdichteverteilung des Heißgases über eine Querschnittsfläche einer Heißgasleitung für das Heißgas umfassen. Eine gleichmäßige Massenstromdichteverteilung stellt eine gleichmäßige Erwärmung des Biomassebehälters und/oder der Biomasse und/oder eine gleichmäßige Abführung von aus der Biomasse verdampftem Wasser sicher.

Das Optimieren kann insbesondere zumindest einen der folgenden Schritte umfassen:
a) Aufnehmen des Strömungsverhaltens;
b) Auswerten des Strömungsverhaltens im Hinblick auf die Homogenität eines Wärme- und/oder Massenstroms des Heißgases auf den Biomassebehälter und/oder die Biomasse;
c) Anpassen des Strömungsverhaltens für einen homogenen Wärme- und/oder Massestrom des Heißgases auf den Biomassebehälter und/oder die Biomasse und
d) Überprüfen des Strömungsverhaltens.

Das Aufnehmen umfasst vorzugsweise ein optisches Beobachten des Strömungsverhaltens und/oder ein Messen zumindest einer Temperatur des Heißgases. Das Strömungsverhalten kann zum Beispiel durch ein Zumischen von Kunstnebel in das Heißgas optisch beobachtet und/oder mit einer Kamera aufgenommen werden. Dabei kann das Strömungsverhalten visuell und/oder durch computergestützte Bildauswertung beurteilt werden. Ein optisches Beobachten bietet, insbesondere bei visueller Auswertung, den Vorteil einer besonders schnellen und einfachen Auswertung. Durch, insbesondere räumlich verteilte, Temperaturmessungen kann auf einfache Weise überprüft werden, ob das Heißgas ausreichend Wärme dorthin transportiert, wo sie zum Aufheizen der Biomasse benötigt wird. Für eine schnelle Erfassung und Auswertung der Temperaturmessungen werden vorzugsweise Temperatursensoren mit einem t₉₀-Wert von höchstens einer Sekunde verwendet, und/oder die Messergebnisse werden mit Hilfe eines Computergeräts dargestellt und/oder ausgewertet. Weiterhin kann das Aufnehmen das Messen zumindest eines, insbesondere dynamischen, Drucks des Heißgases umfassen, um beispielsweise eine Strömungsgeschwindigkeit und/oder eine Massenstromdichte des Heißgases aufzunehmen.

Das Auswerten kann ein Ermitteln von Änderungen des Strömungsverhaltens ausgehend von dem aufgenommenen Strömungsverhalten im Rahmen einer umfassen.

Beispielsweise nach Abschluss der Simulation, kann ein Anpassen des Strömungsverhaltens erfolgen. Im Rahmen des Anpassens können ein oder mehrere Änderungen, insbesondere in Bezug auf die Ausgestaltung eines Verteilers zur gleichmäßigen Verteilung einer Massenstromdichte des Heißgases über eine Querschnittsfläche einer Heißgasleitung für das Heißgas und/oder in Bezug auf andere strömungsbeeinflussende Gegebenheiten in der Heißgasleitung und/oder dem Biomassebehälter vorgenommen werden. Bevorzugt ist hierbei vorgesehen, dass eine im oder an der Heißgasleitung und/oder dem Biomassebehälter befindliche Geometrie, eine Einstellung eines Regulierungselements zur Regulierung eines Heißgasmassenstroms, eine Eingangstemperatur und/oder eine Eingangsströmungsgeschwindigkeit des Heißgases in den Biomassetrockner angepasst wird. Auch können beispielsweise Positionen und/oder Bewegungszustände einer Transportvorrichtung für die Biomasse und/oder einer Hubvorrichtung für den Biomassebehälter einfließen.

Das Überprüfen des Strömungsverhaltens kann virtuell im Rahmen einer Simulation und/oder aber auch anhand eines Aufnehmens des Strömungsverhaltens erfolgen. Bevorzugt wird beides ausgeführt. Beispielsweise kann in einem ersten Schritt nach dem Aufnehmen eine Simulation erfolgen. Angepasst an die Simulation kann sodann das Anpassen erfolgen.

Des Weiteren ist ein Überprüfen des Strömungsverhaltens im Rahmen der Simulation in mehreren Schritten möglich. Dieses kann iterativ erfolgen. Auch besteht die Möglichkeit, dass verschiedene Randbedingungen vorgebbar sind, insbesondere auch Abbruchgrenzen für eine Iteration. Sodann kann die gefundene Lösung im Biomassetrockner verwirklicht werden. Eine nachfolgende Überprüfung durch sodann ermittelte Messwerte kann Aufschluss darüber geben, inwiefern die errechneten Anpassungen in der Realität tatsächlich umgesetzt sind. Sofern notwendig kann eine weitere Anpassung des Strömungsverhaltens durch geeignete Maßnahmen erfolgen.

Um eine Vergleichbarkeit, insbesondere verschiedener Anpassungsmaßnahmen, zu erhalten, ist beispielsweise vorgesehen, dass ein Ausgangszustand herangezogen wird. Dieser Ausgangszustand kann fest vorgegebene Ausgangsparameter, wie beispielsweise einen Heißgasmassenstrom, eine Temperatur und/oder eine Luftfeuchte umfassen. Auch kann eine festgelegte Anordnung eines Transportmittels innerhalb des Biomassebehälters hierbei Berücksichtigung finden. Der Ausgangszustand soll insbesondere eine Wiederholbarkeit von Anpassungen und deren Wirkungen ermöglichen, zumindest für bauähnliche Biomassetrockner. Werden diese zunächst fest vorgegebenen Ausgangsparameter sodann im Rahmen des Anpassens und Überprüfens ebenfalls nacheinander veränderbar eingestellt, kann sodann aufgrund der aufgetretenen Veränderung des Strömungsverhaltens der Einfluss einzelner Maßnahmen abgeleitet werden, bevorzugt qualitativ und/oder auch quantitativ. Insbesondere kann auf diese Weise ein Änderungskatalog erstellt werden, in dem zumindest überschlägig Änderungsprognosen hinterlegt werden. Dieses kann beispielsweise mittels Gewichtungsfaktoren erfolgen, die im Rahmen einer Berechnung Einfluss nehmen können.

Auf diese Weise kann insbesondere auch eine gewonnene Erfahrung von einem Biomassetrockner im Rahmen einer Speicherung innerhalb einer Datenbibliothek genutzt werden, um daraus Rückschlüsse auf vorteilhafte Anpassungen und Änderungen in einem anderen Biomassetrockner ermöglichen zu können, insbesondere um das jeweilige Strömungsverhalten verbessern zu können.

Das Überprüfen des Strömungsverhaltens kann beispielsweise mit dem gleichen Messmitteln erfolgen, mit denen auch das Aufnehmen erfolgt. Bevorzugt werden auch die gleichen Messpositionen herangezogen. Sollte das Überprüfen ergeben, dass eine gewünschte Anpassung des Strömungsverhaltens noch nicht erreicht ist, kann sodann ein weiteres Anpassen durch ein oder mehrere geeignete Maßnahmen erfolgen. Die Auswirkungen dieser Maßnahmen können sodann im Rahmen eines erneuten Überprüfens, das durch eine Simulation und/oder erneutes Aufnehmen erfolgt, verifiziert werden, Das Anpassen und das Überprüfen können insbesondere so oft wiederholt werden, bis ein homogenes Strömungsverhalten erreicht ist.

Erfindungsgemäß kann das Optimieren auch für andere von einem Heißgas durchströmte Trockner als für Biomassetrockner genutzt werden.

Die Erfindung betrifft ferner eine Vorrichtung zum Aufnehmen und Auswerten eines Strömungsverhaltens eines Heißgases in einem Trockner, beispielsweise einem, insbesondere erfindungsgemäßen Biomassetrockner mit ein oder mehreren Messsensoren, einem Speicher und einer Auswerteeinheit. Vorzugsweise ist die Auswerteeinheit mit dem Speicher kommunikativ gekoppelt und in dem Speicher ist ein Auswerteverfahren hinterlegt. Mit dem Auswerteverfahren kann ein, insbesondere erfindungsgemäßes, Auswerten des Strömungsverhaltens erfolgen. Eine weitere Ausgestaltung sieht vor, dass ein oder mehrere Messsensoren in unterschiedlichen Höhen innerhalb des Trockners angeordnet sind; und zwar bevorzugt im Bereich einer Anströmung eines Trocknungsguts durch das Heißgas. Auf diese Weise können zumindest in diesem Bereich Rückschlüsse auf die Wirkung von Veränderungen gezogen werden, die im Trockner vorgenommen werden.

Bevorzugt kann mittels einer Messung neben einer Temperatur auch eine Geschwindigkeit des Heißgases aufgenommen werden. Eine Geschwindigkeitsmessung kann beispielsweise berührungslos durch entsprechende Sensoren erfolgen. Ein Bestandteil der Vorrichtung kann beispielsweise ein portables Computergerät sein, an dem ein oder mehrere Messsensoren angeschlossen sind. Des Weiteren besteht die Möglichkeit, dass auf dem Computergerät eine Berechnungsmöglichkeit zur Verfügung gestellt wird, um zumindest eine Erstauswertung einer Aufnahme des Strömungsverhaltens zu ermöglichen. Hierzu weist das Computergerät vorzugsweise einen Bildschirm auf, auf dem die Ergebnisse der Erstauswertung angezeigt werden können. Es besteht ebenfalls die Möglichkeit, dass von dem Computergerät entsprechende Ergebnisse an eine externe Darstellungseinheit übertragen und dort visuell dargestellt werden.

Die Erfindung betrifft auch die Verwendung getrockneter Biomasse, insbesondere mit einem erfindungsgemäßen Biomassetrockner und/oder durch ein erfindungsgemäßes Verfahren getrockneter Biomasse, als Düngemittel und/oder als Brennstoff.

### Kurze Beschreibung der Zeichnungen

Nachfolgend wird die Erfindung anhand von Ausführungsbeispielen beschrieben, die mit Hilfe der Figuren näher erläutert werden.

Es zeigen:
[Fig.1] eine perspektivische Zeichnung eines erfindungsgemäßen Biomassetrockners;
[Fig.2] eine weitere perspektivische Zeichnung des Biomassetrockners aus Figur 1;
[Fig.3] eine Detailansicht des Heißgaszuführungsmoduls des Biomassetrockners aus Figur 1;
[Fig.4] eine Detailansicht des Heißgasabführungsmoduls des Biomassetrockners aus Figur 1;
[Fig.5] eine Schnittzeichnung des Biomassetrockners aus Figur 1;
[Fig.6] eine schematische Darstellung eines erfindungsgemäßen Verfahrens und
[Fig.7] eine schematische Darstellung einer Anordnung von Sensoren für ein erfindungsgemäßes Verfahren.

### Fig.1

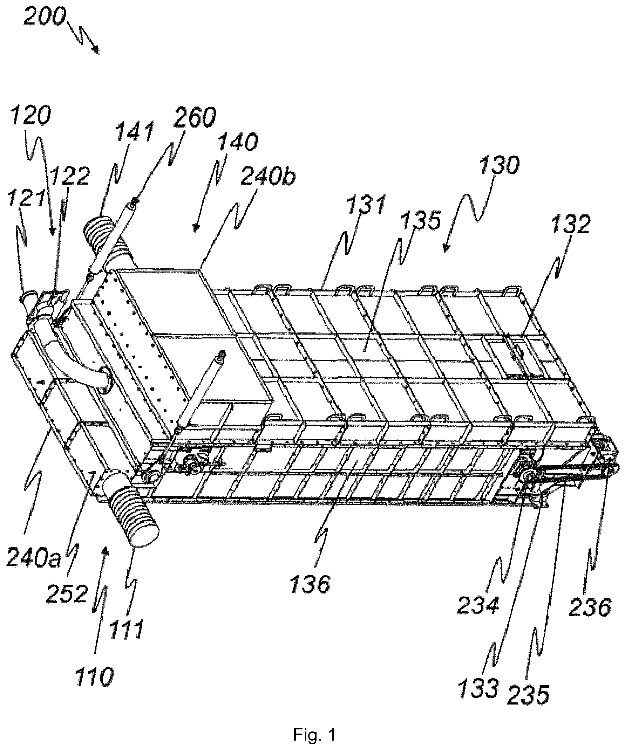

Figur 1 zeigt eine perspektivische Zeichnung eines erfindungsgemäßen Biomassetrockners 200. Der dargestellte Biomassetrockner 200 ist modular aufgebaut mit einem Heißgaszuführungsmodul 110, einem Befüllmodul 120, einem Trocknermodul 130, und einem Heißgasabführungsmodul 140. Ein Trocknermodul 130 kann mit unterschiedlichen Heißgaszuführungsmodulen 110, Befüllmodulen 120 und/oder Heißgasabführungsmodulen 140 kombiniert sein, beispielsweise um einen Biomassetrockner 200 mit unterschiedlichen Heißgasquellen und/oder Biomassezusammensetzungen zu betreiben.

Das dargestellte Heißgaszuführungsmodul 110 weist eine Heißgaszuleitung 111 auf, durch die das Heißgas HG in einen ersten Verteiler 240a und von dort weiter in das Trocknermodul 130 geleitet werden kann. Der dargestellte erste Verteiler 240a ist quaderförmig mit vier geschlossenen Seitenwänden. Eine fünfte Seitenwand umfasst eine mit der Heißgaszuleitung 111 verbundene Eintrittsfläche (nicht dargestellt) für das Heißgas HG. Die Heißgaszuleitung 111 hat vorzugsweise einen ovalen Strömungsquerschnitt, kann aber auch anders gestaltet sein, beispielsweise um eine einfache Verbindung mit einer Heißgasquelle (nicht dargestellt) zu gewährleisten. Eine Querschnittsfläche der Heißgaszuleitung 111 ist an den benötigten Heißgasmassenstrom angepasst. Die sechste Seitenwand ist dem Trocknermodul 130 zugewandt und weist eine Mehrzahl von, beispielsweise sechs, Austrittsflächen (nicht dargestellt) auf, durch die das Heißgas HG aus dem ersten Verteiler 240a in das Trocknermodul 130 austreten kann. Der erste Verteiler 240a ist dabei so ausgelegt, dass ein Massenstrom des Heißgases HG durch die Austrittsflächen gleichmäßig über die Austrittsflächen verteilt ist. Der dargestellte erste Verteiler 240a umfasst ferner eine Anzahl von, beispielsweise zwei, Temperatursensoren 252, zur Überwachung des Heißgasmassenstroms durch den ersten Verteiler 240a.

Das Heißgaszuführungsmodul 110 ist vorzugsweise wie in der Figur dargestellt an einem unteren Abschnitt einer Stirnseite (nicht dargestellt) des Trocknermoduls 130 angeordnet. Dadurch kann das Heißgas HG auf einfache Weise an den Boden eines Biomassebehälters (nicht dargestellt) in dem Trocknermodul 130 geführt werden. Alternativ könnte das Heißgaszuführungsmodul 110 auch, insbesondere in einem unteren Bereich, an einer Längsseite 136 des Trocknermoduls 130 angeordnet sein.

Das dargestellte Befüllmodul 120 umfasst eine Biomassezuleitung 121 durch die die Biomasse in den Biomassebehälter (nicht dargestellt) im Inneren des Trocknermoduls 130 geleitet werden kann. Die dargestellte Biomassezuleitung 121 weist einen runden Strömungsquerschnitt auf, um eine einfache Verbindung mit standardisierten Zuführungssystemen zu gewährleisten. Zur Regulierung der Biomassezufuhr umfasst das Befüllmodul 120 ein Ventil 122, mit dem die Biomassezuleitung 121 verschlossen werden kann.

Das dargestellte Trocknermodul 130 umfasst ein Gehäuse 131, das zumindest eine Heißgasleitung für das Heißgas HG, einen Biomassebehälter 210 mit einem Innenvolumen 212 zur Aufnahme der Biomasse und ein Transportmittel 230 für die Biomasse umschließt. Die von dem Gehäuse 131 umschlossenen Komponenten sind in der Darstellung von Figur 1 nicht sichtbar. Das dargestellte Gehäuse 131 umfasst eine Klappe 132, die insbesondere als Revisionsklappe und/oder als Druckentlastungsklappe ausgestaltet sein kann. Das dargestellte Trocknermodul umfasst einen Antrieb 233 für das Transportmittel 230. Der Antrieb 233 umfasst beispielsweise einen mit einer Antriebsachse 234 des Transportmittels 230, insbesondere über eine Antriebskette 235, verbundenen Elektromotor 236.

Das dargestellte Trocknermodul 130 umfasst ferner eine Hubvorrichtung 260, beispielsweise mit zwei Hydraulikzylindern. Der Biomassetrockner 200 ist über eine Anzahl von, insbesondere zwei, Drehachsen 133 an einer Kante zwischen einer Unterseite und einer Stirnseite 137, insbesondere der dem Heißgaszuführungsmodul 110 gegenüberliegenden Stirnseite 137, mit einem Untergrund des Biomassetrockners 200 verbunden. Die Drehachsen 133 liegen parallel zu der Kante. Daher kann der Biomassetrockner 200 von der Hubvorrichtung 260 einseitig angehoben und um die Drehachse 133 gedreht werden. Dadurch wird der Biomassebehälter (nicht dargestellt) im Inneren des Biomassetrockners 200, beispielsweise für eine einfachere Entleerung, gekippt.

Das dargestellte Heißgasabführungsmodul 140 umfasst einen zweiten Verteiler 240b. Der zweite Verteiler 240b ist wie der erste Verteiler 240a quaderförmig mit vier geschlossenen Seitenwänden. Eine fünfte Seitenwand ist dem Trocknermodul zugewandt und weist eine Mehrzahl von, beispielsweise drei, Austrittsflächen (nicht dargestellt) auf, durch die das Heißgas HG aus dem Trocknermodul in den zweiten Verteiler 240b austreten kann. Die sechste Seitenwand weist eine Eintrittsfläche (nicht dargestellt) auf, durch die das Heißgas HG aus dem zweiten Verteiler 240b in eine Heißgasableitung 141 eintreten kann. Der zweite Verteiler 240b ist dabei so ausgelegt, dass ein Heißgasmassenstrom durch die Austrittsflächen gleichmäßig über die Austrittsflächen verteilt ist.

Das Heißgasabführungsmodul 140 ist vorzugsweise wie in der Figur dargestellt an einer Oberseite 135 des Trocknermoduls 130 und insbesondere an dem gleichen Ende des Trocknermoduls 130 wie das Heißgaszuführungsmodul 110 angeordnet, um eine möglichst einfache Heißgasführung zu erreichen. Alternativ könnte auch an den beiden Längsseiten 136, insbesondere in einem oberen Bereich der Längsseiten 136, des Trocknermoduls 130 jeweils ein Heißgasabführungsmodul 140 angeordnet sein.

### Fig.2

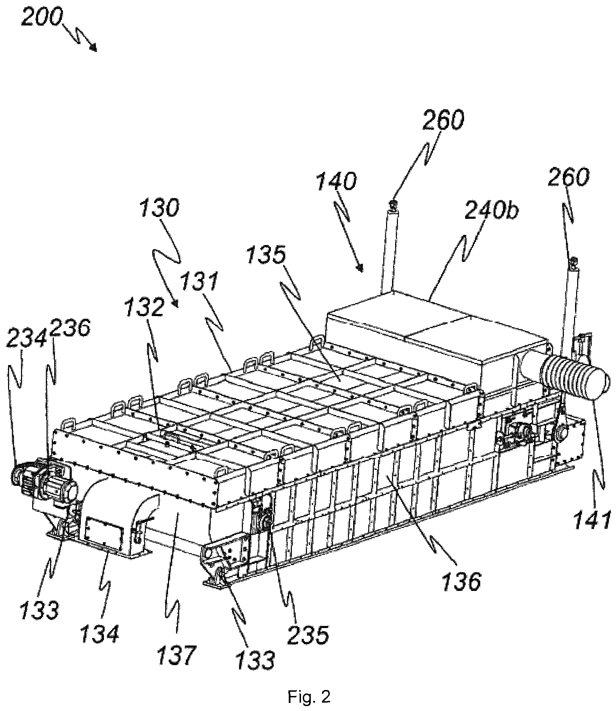

Figur 2 zeigt eine weitere perspektivische Zeichnung des Biomassetrockners 200 aus Figur 1. Zusätzlich zu den bereits bei Figur 1 beschriebenen Merkmalen ist eine Biomasseableitung 134 an dem Gehäuse 131 dargestellt, durch die getrocknete Biomasse aus dem Biomassetrockner 200 entfernt werden kann.

### Fig.3

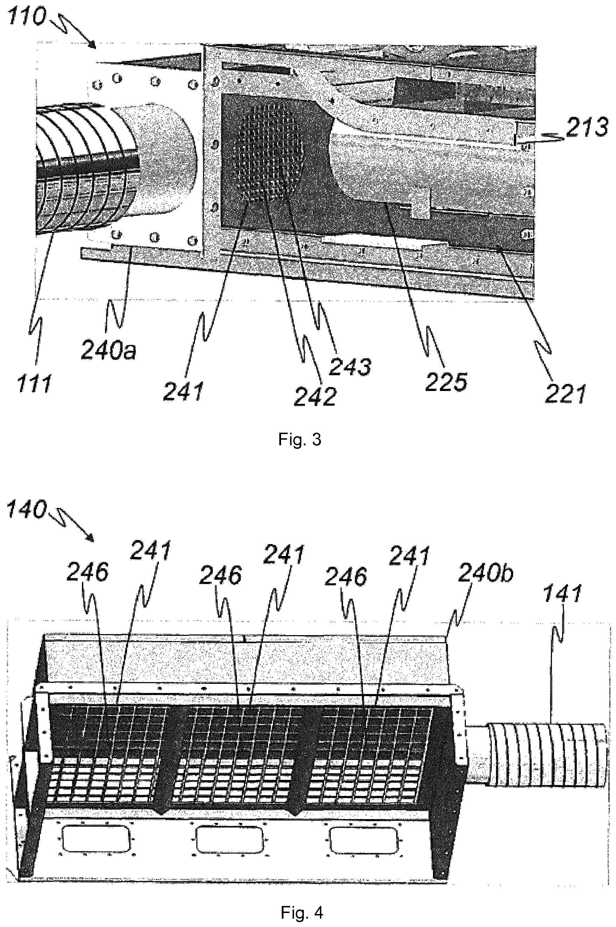

Figur 3 zeigt eine Detailansicht des Heißgaszuführungsmoduls 110 des Biomassetrockners 200 aus Figur 1. In dieser Ansicht ist das Gehäuse 131 des Trocknermoduls 130 nicht dargestellt, sodass eine Austrittsfläche 241 des ersten Verteilers 240a sichtbar ist. In Strömungsrichtung des Heißgases HG direkt vor der Austrittsfläche 241 sind zwei Lochbleche als flächige Regulierungselemente 242, 243 angeordnet. Durch Verschieben der Regulierungselemente 242, 243 gegeneinander kann der Massenstrom des Heißgases HG durch die Austrittsfläche 241 über die Austrittsfläche 241 gleichmäßig reguliert werden. Das gleichmäßig über die Austrittsflächen 241 verteilte Heißgas HG kann durch eine erste Anzahl von, beispielsweise drei, Austrittsflächen 241 direkt in einen ersten Abschnitt 221 der Heißgasleitung, der in wärmeleitender Verbindung direkt unterhalb eines Bodens 213 des Biomassebehälters 210 verläuft, eintreten. Dadurch wird der Biomassebehälter 210 durch das Heißgas HG von einer Außenseite her aufgeheizt. Weiterhin kann das Heißgas HG durch eine zweite Anzahl von, beispielsweise drei, Austrittsflächen (nicht dargestellt) in jeweils einen thermisch isolierenden Heißgaskanal 225 eintreten, der bis zur Mitte des Biomassebehälters führt. Dort kann das Heißgas HG aus dem Heißgaskanal 225 in den ersten Abschnitt 221 strömen. Somit ist nicht nur eine gleichmäßige Verteilung des Heißgasmassenstroms über die Austrittsflächen 241 gegeben, sondern auch eine gleichmäßige Verteilung der an den Biomassebehälter übertragenen Wärme über die Länge des Biomassebehälters in Strömungsrichtung des Heißgases HG gewährleistet.

### Fig.4

Figur 4 zeigt eine Detailansicht des Heißgasabführungsmoduls 140 des Biomassetrockners 200 aus Figur 1. In dieser Ansicht ist das Trocknermodul 130 nicht dargestellt, sodass die, in diesem Beispiel drei, Austrittsflächen 241 des zweiten Verteilers 240b sichtbar sind. Durch die Austrittsflächen 241 kann das Heißgas HG aus dem Trocknermodul 130 in den zweiten Verteiler 240b austreten und von dort über eine Eintrittsfläche (nicht dargestellt) in eine Heißgasableitung 141 eintreten, die beispielsweise zu einem Abluftwäscher (nicht dargestellt) führt. Zum Schutz vor Fremdkörpern, die vom Heißgas HG beispielsweise aus der Biomasse mitgeführt sein können, weist jede der dargestellten Austrittsflächen 241 einen Ansaugschutz 246, beispielsweise in Form eines Wetterschutzgitters, insbesondere eines Z-Profil-Gitters, auf. Ein erfindungsgemäßes Heißgasabführungsmodul 140 kann als Ansaugschutz 246 beispielsweise einen Abscheidefilter umfassen. Von einem Ansaugschutz 246 gesammelte Fremdkörper können beispielsweise in einem unteren Bereich des Heißgasabführungsmoduls 140 für eine weitere Verwendung, zum Beispiel zur Rückführung in den Biomassebehälter 210, gesammelt werden. Die Austrittsflächen 241 des zweiten Verteilers 240b können flächige Regulierungselemente (nicht dargestellt) zur über die Austrittsflächen 241 gleichmäßigen Regulierung des Heißgasmassenstroms aus dem Trocknermodul 130 in das Heißgasabführungsmodul 140 aufweisen.

### Fig.5

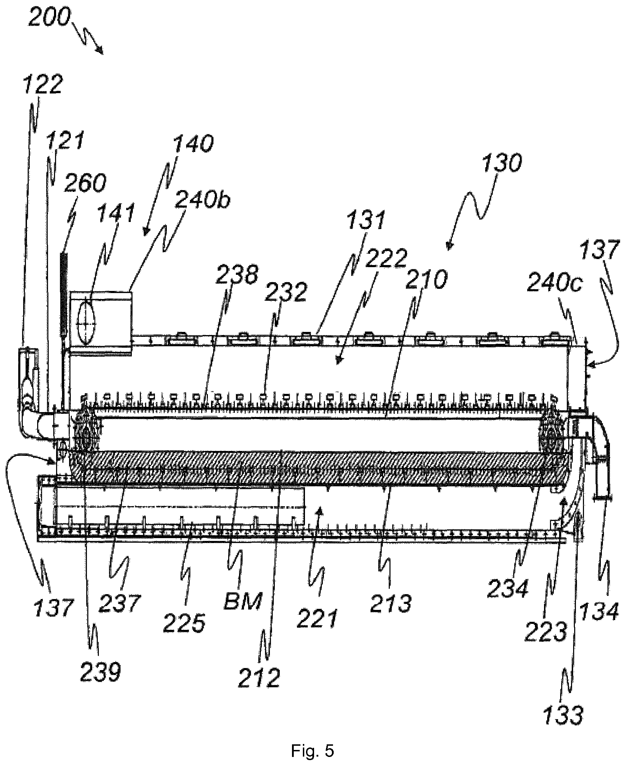

Figur 5 zeigt eine Schnittzeichnung durch den Biomassetrockner 200 aus Figur 1 parallel zu einer Längsseite (nicht dargestellt) des Trocknermoduls 130. Durch ein hier nicht dargestelltes Heißgaszuführungsmodul an einer Stirnseite 137 des Trocknermoduls wird das Heißgas HG entweder direkt oder durch eine Anzahl von, beispielsweise drei, thermisch isolierenden Gaskanälen 225 in einen ersten Abschnitt 221 einer Heißgasleitung geführt. Eine Oberseite des ersten Abschnitts 221 wird von einem Boden 213 eines Biomassebehälters 210 gebildet. Dadurch wird Wärme aus dem Heißgas HG, das horizontal an dem Boden 213 entlangströmt, auf den Biomassebehälter 210 und die darin enthaltene Biomasse BM übertragen. Dadurch, dass ein Teil des Heißgases HG bis zur Mitte des Biomassebehälters 210 in 10 Gaskanälen 225 geführt wird, wird sichergestellt, dass der Boden 213 über seine Länge in Strömungsrichtung des Heißgases HG gleichmäßig erwärmt wird.

In Strömungsrichtung hinter dem Biomassebehälter 210 wird das Heißgas HG an der dem Heißgaszuführungsmodul gegenüberliegenden Stirnseite 137 des Trocknermoduls 130 durch einen Umlenkabschnitt 223 vertikal nach oben umgelenkt und einem dritten Verteiler 240c zugeführt. Der dritte Verteiler 240c ist dazu ausgelegt, dass Heißgas HG gleichmäßig über eine Querschnittsfläche eines sich anschließenden zweiten Abschnitts 222 der Heißgasleitung verteilt in horizontaler Richtung in den zweiten Abschnitt 222 einzuleiten. Der dritte Verteiler 240c kann in der Höhe variabel in dem Trocknermodul 130 angeordnet sein, damit das Heißgas HG mit variablem Abstand von der Biomasse BM in den zweiten Abschnitt 222 einströmt. Dadurch kann die Wärmeübertragung von dem Heißgas HG im zweiten Abschnitt 222 auf die Biomasse BM variiert werden, beispielsweise um Schwankungen einer Heißgastemperatur zu kompensieren.

Die Oberseite des Biomassebehälters 210 und die dem Biomassebehälter 210 zugewandte Unterseite des zweiten Abschnitts 222 sind offen, sodass Wärme von dem Heißgas HG an die Biomasse BM und Wasserdampf von der Biomasse BM an das Heißgas HG übertragen werden können.

Der dargestellte Biomassebehälter 210 ist als im Wesentlichen quaderförmige, nach oben offene Wanne ausgebildet. An einer Stirnseite weist der Biomassebehälter 210 eine Biomassezuführungsöffnung, durch die die Biomasse BM (schraffiert dargestellt) dem Biomassebehälter 210 aus der Biomassezuleitung 121 zugeführt werden kann, auf. An der gegenüberliegenden Stirnseite weist der Biomassebehälter 210 eine Entleerungsöffnung, durch die die getrocknete Biomasse BM aus dem Biomassebehälter 210 über die Biomasseableitung 134 abgeführt werden kann, auf. Die Übergänge von den Stirnseiten zum Boden 213 des Biomassebehälters 210 sind jeweils abgerundet ausgebildet, um eine Entteerung und Reinigung des Biomassebehälters 210 zu vereinfachen,

In dem Biomassebehälter 210 ist ein Transportmittel in Form einer Förderkettenvorrichtung angeordnet. Die dargestellte Förderkettenvorrichtung ist so angeordnet, dass ein unterer Abschnitt 237 und ein oberer Abschnitt 238 der Förderkettenvorrichtung jeweils in Längsrichtung des Biomassebehälters 210 parallel zum Boden 213 und den Längsseiten des Biomassebehälters 210 verlaufen. Der untere Abschnitt 237 verläuft unterhalb einer Fülllinie 212 des Biomassebehälters 210 und der obere Abschnitt 238 oberhalb der Fülllinie 212. Jeweils an den stirnseitigen Enden des Biomassebehälters 210 gehen der untere Abschnitt 237 und der obere Abschnitt 238 über Umlenkelemente 239, beispielsweise Zahnräder, ineinander über. Zumindest eines der Umlenkelemente 239 kann eine Antriebsachse 234 der Förderkettenvorrichtung umfassen. Dadurch kann die Förderkettenvorrichtung Biomasse BM aus dem Biomassebehälter 210 in die Nähe des zweiten Abschnitts 222 der Heißgasleitung transportieren, sodass ein besonders wirksamer Wärme- und Wasserdampfaustausch zwischen dem Heißgas HG und der Biomasse BM möglich wird. Für einen besonders effizienten Wärme- und Wasserdampfaustausch nach dem Gegenstromprinzip bewegt sich der obere Abschnitt 238 vorzugsweise der Strömungsrichtung des Heißgases HG entgegen.

Um die Bildung einer Biomasseschicht am Boden 213 des Biomassebehälters 210 zu verhindern, umfasst die Förderkettenvorrichtung eine Vielzahl von Abstreifmitteln 232, die von der Förderkettenvorrichtung an dem Boden 213 entlanggeführt werden, um die Biomasse BM davon abzustreifen. Die Abstreifmittel 232 können jeweils eine Vertiefung aufweisen, in der Biomasse BM transportiert werden kann. Die Abstreifmittel 232 können jeweils eine Anzahl von Öffnungen aufweisen. Durch die Öffnungen kann Biomasse BM hindurchtreten, sodass der Bewegungswiderstand der Abstreifmittel 232 in der Biomasse reduziert wird und/oder Biomasse BM vom oberen Abschnitt 238 der Förderkettenvorrichtung zurück in einen darunter liegenden Bereich des Biomassebehälters 210 gelangen kann.

Oberhalb des dem dritten Verteiler 240c abgewandten stirnseitigen Endes des Biomassebehälters 210 wird das Heißgas HG durch das Heißgasabführungsmodul 140 aus dem zweiten Abschnitt 222 der Heißgasleitung abgeführt.

Zur Entleerung des Biomassebehälters 210 kann das Trocknermodul 130 an der der Entleerungsöffnung gegenüberliegenden Stirnseite 137 von der Hubvorrichtung 260 angehoben werden, sodass der Boden 213 des Biomassebehälters 210 um einen Winkel aus einer horizontalen Ebene ausgelenkt wird. Der Winkel beträgt beispielsweise 2° bis 20°, vorzugsweise 5° bis 15°, insbesondere etwa 10°. Dadurch fließt die Biomasse BM, gegebenenfalls unterstützt von der Förderkettenvorrichtung, die zur Entleerung so angetrieben wird, dass sich der untere Abschnitt 237 auf die Entleerungsöffnung zu bewegt, zur Entleerungsöffnung und kann den Biomassebehälter 210 über die Biomasseableitung 134 verlassen.

### Fig.6

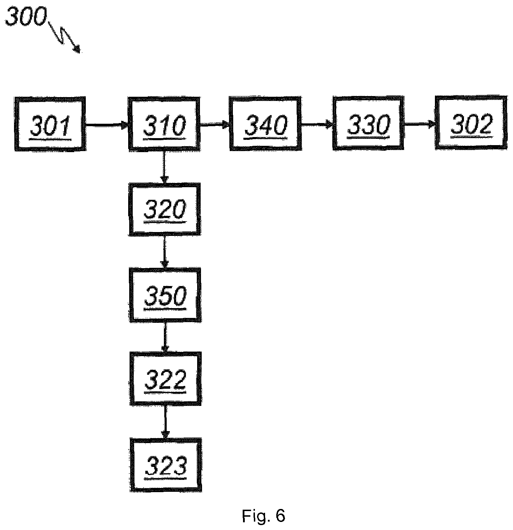

Figur 6 zeigt eine schematische Darstellung eines erfindungsgemäßen Verfahrens 300 zum Trocknen von Biomasse BM in einem Biomassetrockner 200. Das dargestellte Verfahren 300 umfasst ein Befüllen 301 eines Biomassebehälters 210 des Biomassetrockners 200, beispielsweise durch ein zeitlich limitiertes Öffnen eines Ventils 122 in einer Biomassezuleitung 121, vorzugsweise bei gleichzeitigem Überwachen eines Füllstands des Biomassebehälters 210. Ist ein vorbestimmter Füllstand erreicht, folgt ein Aufheizen 310 des Biomassebehälters 210 durch ein Heißgas HG von einer Außenseite des Biomassebehälters 210 aus, beispielsweise indem das Heißgas HG unter einem Boden 213 des Biomassebehälters 210 entlanggeführt wird. Das Heißgas HG kann beispielsweise das Abgas eines Blockheizkraftwerks sein. Vorzugsweise werden eine Eingangstemperatur und ein Eingangsmassenstrom des in den Biomassetrockner 200 eintretenden Heißgases HG gemessen.

Während des Aufheizens 310 kann ein Überwachen 340 des Verfahrens 300 erfolgen, das beispielsweise ein Messen zumindest eines Sicherheitsparameters, ausgewählt aus einer Eingangstemperatur des in den Biomassetrockner 200 eintretenden Heißgases HG; einer Biomassetemperatur der Biomasse BM; einem Bewegungszustand eines Transportmittels für die Biomasse BM und dem Füllstand, umfasst. Durch das Messen eines Sicherheitsparameters kann eine Gefahr eines Überhitzens der Biomasse BM rechtzeitig erkannt werden, um sie, beispielsweise durch ein Unterbrechen des Aufheizens 310 abzuwenden.

Vorteilhafterweise umfasst das Verfahren 300 ein Vorbeiströmen 320 des Heißgases HG an einer offenen Oberseite des Biomassebehälters 210, nachdem das Heißgas HG unter dem Boden 213 entlanggeströmt ist. Dabei wird für eine effiziente Wärme- und Wasserdampfübertragung zwischen dem Heißgas HG und der Biomasse BM vorteilhafterweise ein Teil der Biomasse auf das vorbeiströmende Heißgas HG zu transportiert. Für eine möglichst einfache Strömungsführung wird das Heißgas HG vorzugsweise nicht in den Biomassebehälter 210 hinein, sondern horizontal darüber hinweg geleitet.

Nach dem Vorbeiströmen 320 können eine Ausgangstemperatur und ein Ausgangsmassenstrom des Heißgases HG gemessen werden, sodass zusammen mit der Eingangstemperatur und dem Eingangsmassenstrom ein Feststellen 350 eines Wärmeverbrauchs des Biomassetrockners 200 erfolgen kann.

Im weiteren Verlauf des Heißgasstroms kann ein Reinigen 322 des Heißgases HG, zum Beispiel mit einem Abluftwäscher, erfolgen, wobei das Heißgas HG olfaktorisch neutralisiert werden kann. Ein Füllstand des Abluftwäschers kann im Rahmen des Verfahrens 300 überwacht werden.

Nach dem Reinigen 322 kann ein Abströmen 232 des Heißgases HG in eine Umgebung des Biomassetrockners 200 erfolgen, das beispielsweise durch einen Ventilator unterstützt werden kann. Die Funktion des Ventilators kann beispielsweise durch ein Messen eines dynamischen Drucks des Heißgases HG überwacht werden. Vorzugsweise wird zur Funktionsüberwachung des Ventilators der gleiche dynamische Druck des Heißgases HG herangezogen wie zur Ermittlung des Ausgangsmassenstroms des Heißgases HG.

Während des Aufheizens 310 kann ein Ermitteln 330 eines Wassergehalts der Biomasse BM erfolgen, das das Messen zumindest einer physikalischen Eigenschaft der Biomasse, ausgewählt aus dem Volumen, der Masse und der Viskosität der Biomasse, umfasst. Bei Erreichen eines festgelegten Wassergehalts wird das Aufheizen 310 beendet und ein Entleeren 302 des Biomassebehälters 210 eingeleitet werden.

Das Entleeren 302 erfolgt beispielsweise durch ein Kippen des Biomassebehälters 210, wobei die Biomasse BM durch eine Entleerungsöffnung, insbesondere unterstützt durch das Transportmittel für die Biomasse BM, aus dem Biomassebehälter 210 befördert wird.

### Fig.7

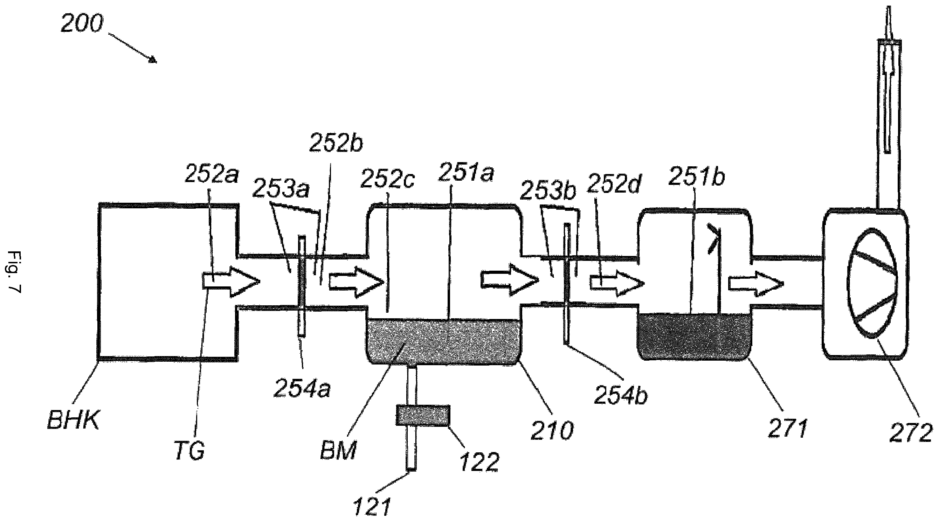

Figur 7 zeigt eine schematische Darstellung einer Anordnung von Sensoren an einem, insbesondere erfindungsgemäßen, Biomassetrockner 200 für ein erfindungsgemäßes Verfahren 300. Das Heißgas HG für den dargestellten Biomassetrockner 200 wird als Abgasstrom eines Blockheizkraftwerks BHKW zur Verfügung gestellt. Die Anfangstemperatur des Heißgases HG beim Austritt aus dem Blockheizkraftwerk BHKW kann mit einem ersten Temperatursensor 252a gemessen werden. Liegt die Anfangstemperatur zu hoch, muss sie vor Kontakt des Heißgases HG mit dem Biomassebehälter 210, beispielsweise durch Zumischen von Frischluft, reduziert werden, um ein Überhitzen der Biomasse BM zu verhindern. Liegt die Anfangstemperatur zu niedrig kann keine ausreichend schnelle Trocknung der Biomasse sichergestellt werden, sodass Betriebsparameter des Blockheizkraftwerkes BHKW für eine höhere Anfangstemperatur angepasst werden müssen.

Der Eingangsmassenstrom und die Eingangstemperatur des Heißgases HG nach Verlassen des Blockheizkraftwerkes BHKW und vor Kontakt mit dem Biomassebehälter 210 können mit Hilfe eines ersten Differenzdrucksensors 253a an einer ersten Messblende 254a, die einen bekannten Strömungsquerschnitt für das Heißgas HG definiert, und eines zweiten Temperatursensors 252b gemessen werden. An dem Biomassebehälter 210 können mit einem dritten Temperatursensor 252c und einem ersten Füllstandssensor 251a Temperatur und Füllstand der Biomasse BM in dem Biomassebehälter 210 gemessen werden.

Während eines Befüllens 301 des Biomassebehälters 210 kann der mit dem ersten Füllstandssensor 215a gemessene Füllstand zur Steuerung eines Ventils 122 in einer Biomassezuleitung 121, durch die die Biomasse BM in den Biomassebehälter 210 geleitet wird, verwendet werden.

Der Füllstand des Biomassebehälters 210, die Temperatur der Biomasse BM und/oder die Eingangstemperatur des Heißgases HG können dazu verwendet werden, eine Gefahr eines 25 Überhitzens der Biomasse BM zu erkennen, um Gegenmaßnahmen, beispielsweise eine Unterbrechung der Heißgaszufuhr, einzuleiten.

Der Ausgangsmassenstrom und die Ausgangstemperatur des Heißgases HG nach Kontakt mit dem Biomassebehälter 210 können mit Hilfe eines zweiten Differenzdrucksensors 253b an einer zweiten Messblende 254b, die einen bekannten Strömungsquerschnitt für das Heißgas HG definiert, und eines vierten Temperatursensors 252d gemessen werden. Aus Eingangsmassenstrom, Eingangstemperatur, Ausgangsmassenstrom und Ausgangstemperatur des Heißgases HG kann die zur Trocknung der Biomasse BM verbrauchte Wärmemenge ermittelt werden.

Nach Passieren der zweiten Messblende 254b strömt das Heißgas HG durch eine Abgasreinigungsvorrichtung 271, beispielsweise einen Abluftwäscher, dessen Füllstand mit einem zweiten Füllstandssensor 251b gemessen werden kann. Liegt der Füllstand des Abluftwäschers außerhalb eines festgelegten Bereichs, ist keine zuverlässige Reinigung des Heißgases HG gewährleistet, sodass ein Trocknungsvorgang unterbrochen werden muss.

Der Heißgasstrom kann von einem Heißgasantrieb 272, beispielsweise einem Ventilator, angetrieben sein, der stromabwärts der Abgasreinigungsvorrichtung 271 von dem Heißgas HG durchströmt wird. Der Heißgasantrieb 272 kann zur Einstellung eines Eingangsmassenstroms und/oder Ausgangsmassenstromes des Heißgases geregelt werden.

Merkmale, die im Kontext eines Beispiels dargestellt sind, können erfindungsgemäß auch anders kombiniert werden.

### Liste der Bezugszeichen

- 110: Heißgaszuführungsmodul
- 111: Heißgaszuleitung
- 120: Befüllmodul
- 121: Biomassezuleitung
- 122: Ventil
- 130: Trocknermodul
- 131: Gehäuse
- 132: Klappe
- 133: Drehachse
- 134: Biomasseableitung
- 135: Oberseite
- 136: Längsseite
- 137: Stirnseite
- 140: Heißgasabführungsmodul
- 141: Heißgasableitung
- 200: Biomassetrockner
- 210: Biomassebehälter
- 212: Fülllinie
- 213: Boden
- 221: erster Abschnitt
- 222: zweiter Abschnitt
- 223: Umlenkabschnitt
- 225: Heißgaskanal
- 232: Abstreifmittel
- 233: Antrieb
- 234: Antriebsachse
- 235: Antriebskette
- 236: Elektromotor
- 237: unterer Abschnitt
- 238: oberer Abschnitt
- 239: Umlenkelement
- 240: Verteiler
- 241: Austrittsfläche
- 242: erstes flächiges Regulierungselement
- 243: weiteres flächiges Regulierungselement
- 246: Ansaugschutz
- 251: Füllstandssensor
- 252: Temperatursensor
- 253: Differenzdrucksensor
- 260: Hubvorrichtung
- 271: Abgasreinigungsvorrichtung
- 272: Heißgasantrieb
- 300: Verfahren
- 301: Befüllen
- 302: Entleeren
- 310: Aufheizen
- 320: Vorbeiströmen
- 322: Reinigen
- 323: Abströmen
- 330: Ermitteln
- 340: Überwachen
- 350: Feststellen
- BHKW: Blockheizkraftwerk
- BM: Biomasse
- HG: Heißgas

## Patentansprüche

1. Biomassetrockner (200) mit zumindest einem Biomassebehälter (210) mit einem Innenvolumen zur Aufnahme von fließfähiger Biomasse (BM) und zumindest einer Heißgasleitung für ein Heißgas (HG) zum Trocknen der Biomasse (BM), wobei
a) ein erster Abschnitt (221) der Heißgasleitung mit einer Außenseite des Biomassebehälters (210) wärmeleitend verbunden ist und zur Leitung des Heißgases (HG) entlang der Außenseite an einem Boden (213) des Biomassebehälters (210) verläuft; und
b) die Heißgasleitung zumindest einen zweiten, dem ersten Abschnitt (221) in Strömungsrichtung des Heißgases nachgeordneten, Abschnitt (222) zur Leitung des Heißgases (HG) in einer horizontalen Richtung umfasst, wobei der zweite Abschnitt (222) oberhalb des Biomassebehälters (210) angeordnet und mit dem Innenvolumen des Biomassebehälters (210) zum Gasaustausch verbunden ist
**gekennzeichnet durch**
ein Transportmittel zum Transport der Biomasse (BM) aus einem unteren Bereich des Innenvolumens des Biomassebehälters (210) in einen oberen Bereich des Innenvolumens, der mit dem zweiten Abschnitt (222) der Heißgasleitung zum Gasaustausch verbunden ist.

2. Biomassetrockner (200) gemäß Anspruch 1,
**dadurch gekennzeichnet, dass**
die Heißgasleitung einen Übergangsabschnitt zur vertikalen Führung des Heißgases von dem ersten Abschnitt (221) in den zweiten Abschnitt (222) umfasst, wobei der Übergangsabschnitt bezüglich eines Materialaustauschs von dem Innenvolumen getrennt ist.

3. Biomassetrockner (200) gemäß einem der Ansprüche 1 bis 2,
**dadurch gekennzeichnet, dass**
das Transportmittel eine Anzahl von Abstreifmitteln (232) zum Abstreifen der Biomasse (BM) von einer Innenfläche des Biomassebehälters (210) umfasst, wobei zumindest eines der Abstreifmittel (232) bevorzugt eine Vertiefung zur Aufnahme von Biomasse (BM) aufweist.

4. Biomassetrockner (200) gemäß einem der Ansprüche 1 bis 3,
**gekennzeichnet durch**
zumindest einen Verteiler (240) zur gleichmäßigen Verteilung einer Massenstromdichte des Heißgases (HG) über eine Querschnittsfläche der Heißgasleitung, wobei der Verteiler (240) eine Mehrzahl von Austrittsflächen (241) für das Heißgas (HG), die zusammen die Querschnittsfläche überdecken, aufweist.

5. Biomassetrockner (200) gemäß Anspruch 4,
**dadurch gekennzeichnet, dass**
in Strömungsrichtung des Heißgases (HG) vor zumindest einer Austrittsfläche (241) des Verteilers (240) zumindest ein erstes flächiges Regulierungselement (242) und ein weiteres flächiges Regulierungselement (243) orthogonal zur Strömungsrichtung angeordnet sind, wobei
a) zumindest eines der Regulierungselemente (242, 243) in zumindest einer Richtung orthogonal zu der Strömungsrichtung verschiebbar ist, und
b) die Regulierungselemente (242, 243) jeweils eine Anzahl von Öffnungen (244) aufweisen, wobei korrespondierende Öffnungen (244) der Regulierungselemente (242, 243) in Strömungsrichtung des Heißgases (HG) hintereinander anordenbar sind.

6. Biomassetrockner (200) gemäß einem der Ansprüche 1 bis 5,
**gekennzeichnet durch**
eine Anzahl von Sensoren zur Überwachung eines Wassergehalts der Biomasse (BM), wobei zumindest einer der Sensoren ausgewählt ist aus
a) einem Füllstandssensor (251) zur Messung eines Füllstands des Biomassebehälters (210),
b) einem Drucksensor zur Messung eines Gewichts des Biomassebehälters (210) und
c) einem Drehmomentsensor zur Messung eines Antriebsdrehmoments eines Transportmittels für die Biomasse (BM).

7. Biomassetrockner (200) gemäß einem der Ansprüche 1 bis 6,
**gekennzeichnet durch**
a) zumindest eine Hubvorrichtung (260) zur zumindest einseitigen Höhenverstellung des Biomassebehälters (210);
b) ein den Biomassebehälter (210) und zumindest den ersten Abschnitt (221) und den zweiten Abschnitt (222) der Heißgasleitung umschließendes Gehäuse (131);
c) ein Befüllmodul (120) zur Befüllung des Biomassebehälters (210) mit Biomasse (BM) und/oder
d) eine Steuervorrichtung zur Steuerung, Regelung, Überwachung und/oder Dokumentation des Betriebs des Biomassetrockners (200).

8. Biomassetrockner (200) gemäß einem der Ansprüche 1 bis 7,
**gekennzeichnet durch**
zumindest eine Sicherheitsvorrichtung, die ausgewählt ist aus
a) einer Druckentlastungsklappe in einem Gehäuse (131) des Biomassetrockners (200);
b) einer Fällungsvorrichtung zur Ausfällung potentiell gefährlicher Bestandteile aus der Biomasse (BM) und
c) einer Abgasreinigungsvorrichtung (271) zur Entfernung geruchsbelästigender und/oder umweltbelastender Bestandteile aus dem Heißgas (HG).

9. Biomassetrockner (200) gemäß einem der Ansprüche 1 bis 8,
**gekennzeichnet durch**
eine Bewegungsvorrichtung zum Transport des Biomassetrockners (200), wobei die Bewegungsvorrichtung bevorzugt eine zumindest den Biomassebehälter (210) sowie den ersten Abschnitt (221) und den zweiten Abschnitt (222) der Heißgasleitung umschließende, transportable Einhausung umfasst, wobei die Einhausung besonders bevorzugt einen ISO-Container umfasst.

10. Verfahren (300) zum Trocknen von fließfähiger Biomasse (BM) in einem Biomassetrockner (200) gemäß einem der Ansprüche 1 bis 9 mit zumindest folgenden Schritten:
a) Aufheizen (310) eines die Biomasse (BM) enthaltenden Biomassebehälters (210) durch ein Heißgas (HG) von einer Außenseite eines Bodens des Biomassebehälters (210) aus, wobei das Heißgas (HG) durch eine Heißgasleitung an der Außenseite entlanggeführt wird, und
b) Vorbeiströmen (320) des Heißgases (HG) an einer offenen Oberseite des Biomassebehälters (210), wobei das Heißgas (HG) in horizontaler Richtung in einer Heißgasleitung, die zum Gasaustausch mit einem Innenvolumen des Biomassebehälters (210) verbunden ist, geführt wird,
**gekennzeichnet durch**
c) ein Transportieren der Biomasse (BM) aus einem unteren Bereich des Innenvolumens des Biomassebehälters (210) in einen oberen Bereich des Innenvolumens, der mit dem zweiten Abschnitt (222) der Heißgasleitung zum Gasaustausch verbunden ist.

11. Verfahren (300) gemäß Anspruch 10,
**gekennzeichnet durch**
ein Transportieren zumindest eines Teils der Biomasse (BM) auf das vorbeiströmende Heißgas (HG) zu.

12. Verfahren (300) gemäß Anspruch 10 oder 11,
**gekennzeichnet durch**
ein Ermitteln (330) eines Wassergehalts der Biomasse (BM), wobei das Ermitteln (330) das Messen zumindest einer physikalischen Eigenschaft der Biomasse (BM), ausgewählt aus dem Volumen, der Masse und der Viskosität der Biomasse (BM), umfasst.

13. Verfahren (300) gemäß einem der Ansprüche 10 bis 12,
**gekennzeichnet durch**
ein Überwachen (340) des Verfahrens (300), wobei das Überwachen (340) ein Messen zumindest eines der folgenden Sicherheitsparameter des Verfahrens (300) umfasst:
a) eine Eingangstemperatur des in den Biomassetrockner (200) eintretenden Heißgases (HG);
b) eine Biomassetemperatur der Biomasse (BM);
c) ein Bewegungszustand eines Transportmittels für die Biomasse (BM);
d) ein Füllstand des Biomassebehälters (210);
e) ein Füllstand eines Abluftwäschers zur Entfernung geruchsbelästigender und/oder umweltbelastender Bestandteile des Heißgases (HG) und
f) eine Konzentration eines potentiell gefährlichen, geruchsbelästigenden und/oder umweltbelastenden Bestandteils in dem Heißgas (HG).

14. Verfahren (300) gemäß einem der Ansprüche 10 bis 13,
**gekennzeichnet durch**
ein Feststellen (350) eines Wärmeverbrauchs des Biomassetrockners (200), wobei das Feststellen (350) ein Messen zumindest einer der folgenden physikalischen Eigenschaften des Heißgases (HG) umfasst:
a) eine Eingangstemperatur und ein Eingangsmassenstrom des in den Biomassetrockner (200) eintretenden Heißgases (HG) sowie
b) eine Ausgangstemperatur und ein Ausgangsmassenstrom des aus dem Biomassetrockner (200) austretenden Heißgases (HG).

15. Verfahren (300) gemäß einem der Ansprüche 10 bis 14,
**gekennzeichnet durch**
ein Optimieren eines Strömungsverhaltens des Heißgases (HG) in dem Biomassetrockner (200) für eine gleichmäßige Massenstromdichteverteilung des Heißgases (HG) über eine Querschnittsfläche einer Heißgasleitung für das Heißgas (HG), umfassend bevorzugt ein Aufnehmen des Strömungsverhaltens, wobei das Aufnehmen ein optisches Beobachten des Strömungsverhaltens und/oder ein Messen zumindest einer Temperatur des Heißgases (HG) umfasst.

## Claims

1. Biomass dryer (200) with at least one biomass container (210) with an internal volume for receiving flowable biomass (BM) and at least one hot gas line for a hot gas (HG) for drying the biomass (BM), wherein
a. a first section (221) the hot gas line is connected in a thermally conductive manner to an outside of the biomass container (210) and runs along the outside at a bottom (213) of the biomass container (210) for the conduction of the hot gas (HG); and
b. the hot gas line comprises at least one second section (222) downstream of the first section (221) in the flow direction of the hot gas (HG) for guiding the hot gas (HG) in a horizontal direction, the second section (222) being arranged above the biomass container (210) and being connected to the internal volume of the biomass container (210) for gas exchange,
**characterized by**
a transport means for transporting the biomass (BM) from a lower region of the internal volume of the biomass container (210) into an upper region of the internal volume, which is connected to the second section (222) of the hot gas line for gas exchange.

2. Biomass dryer (200) according to claim 1,
**characterized in that**
the hot gas line comprises a transition section for vertically guiding the hot gas from the first section (221) into the second section (222), the transition section being separated from the internal volume with regard to a material exchange.

3. Biomass dryer (200) according to one of Claims 1 to 2,
**characterized in that**
the transport means comprises a number of stripping means (232) for stripping the biomass (BM) from an inner surface of the biomass container (210), at least one of the stripping means (232) preferably having a recess for receiving biomass (BM).

4. Biomass dryer (200) according to one of claims 1 to 3,
**characterized by**
at least one distributor (240) for uniformly distributing a mass flow density of the hot gas (HG) over a cross-sectional area of the hot gas line, wherein the distributor (240) has a plurality of outlet surfaces (241) for the hot gas (HG), which together cover the cross-sectional area.

5. Biomass dryer (200) according to claim 4,
**characterized in that**
at least one first flat regulating element (242) and a further flat regulating element (243) are arranged in the flow direction of the hot gas (HG) before the at least one outlet surface (241) of the distributor (240) orthogonally to the flow direction, wherein
a. at least one of the regulating elements (242, 243) is displaceable in at least one direction orthogonal to the flow direction, and
b. the regulating elements (242, 243) each have a number of openings (244), wherein corresponding openings (244) of the regulating elements (242, 243) can be arranged one behind the other in the flow direction of the hot gas (HG).

6. Biomass dryer (200) according to one of claims 1 to 5,
**characterized by**
a number of sensors for monitoring a water content of the biomass (BM), at least one of the sensors being selected from
a. a filling level sensor (251) for measuring a filling level of the biomass container (210),
b. a pressure sensor for measuring a weight of the biomass container (210) and
c. a torque sensor for measuring a drive torque of a transport means for the biomass (BM).

7. Biomass dryer (200) according to one of claims 1 to 6,
**characterized by**
a. at least one lifting device (260) for at least one-sided height adjustment of the biomass container (210);
b. a housing (131) enclosing the biomass container (210) and at least the first section (221) and the second section (222) of the hot gas line;
c. a filling module (120) for filling the biomass container (210) with biomass (BM) and / or
d. a control device for controlling, regulating, monitoring and / or documenting the operation of the biomass dryer (200).

8. Biomass dryer (200) according to one of claims 1 to 7,
**characterized by**
at least one safety device which is selected from
a. a pressure relief flap in a housing (131) of the biomass dryer (200);
b. a precipitation device for precipitating potentially dangerous components from the biomass (BM) and
c. an exhaust gas cleaning device (271) for removing odorous and / or polluting components from the hot gas (HG).

9. Biomass dryer (200) according to one of claims 1 to 8,
**characterized by**
a moving device for transporting the biomass dryer (200), wherein the moving device preferably comprises at least one transportable enclosure enclosing at least the biomass container (210) and the first section (221) and the second section (222) of the hot gas line, the enclosure particularly preferably comprising an ISO freight container.

10. Method (300) for drying flowable biomass (BM) in a biomass dryer (200) according to one of claims 1 to 9, comprising the following steps:
a. heating (310) a biomass container (210) containing the biomass (BM) by a hot gas (HG) from an outside of a bottom of the biomass container (210), the hot gas (HG) being guided along the outside through a hot gas line, and
b. flowing (320) past an open top of the biomass container (210) of the hot gas (HG), the hot gas (HG) being guided in a horizontal direction in a hot gas line which is connected to an internal volume of the biomass container (210) for gas exchange,
**characterized by**
c. transporting the biomass (BM) from a lower region of the internal volume of the biomass container (210) into an upper region of the internal volume, which is connected to the second section (222) of the hot gas line for gas exchange.

11. Method (300) according to claim 10,
**characterized by**
transporting at least a part of the biomass (BM) towards the hot gas (HG) flowing past.

12. Method (300) according to claim 10 or 11,
**characterized by**
determining (330) a water content of the biomass (BM), wherein the determining (330) comprises measuring at least one physical property of the biomass (BM) selected from the volume, the mass and the viscosity of the biomass (BM).

13. Method (300) according to one of claims 10 to 12,
**characterized by**
monitoring (340) the method (300), wherein the monitoring (340) comprises measuring at least one of the following security parameters of the method (300):
a. an inlet temperature of the hot gas (HG) entering the biomass dryer (200);
b. a biomass temperature of the biomass (BM);
c. a state of motion of a transport means for the biomass (BM);
d. a fill level of the biomass container (210);
e. a fill level of an exhaust air scrubber to remove odour-nuisance and / or environmentally polluting components of the hot gas (HG) and
f. a concentration of a potentially dangerous, odour-nuisance and / or environmentally polluting component in the hot gas (HG).

14. Method (300) according to one of claims 10 to 13,
**characterized by**
determining (350) a heat consumption of the biomass dryer (200), wherein the determining (350) comprises measuring at least one of the following physical properties of the hot gas (HG):
a. an inlet temperature and an inlet mass flow of the hot gas (HG) entering the biomass dryer (200) and
b. an outlet temperature and an outlet mass flow of the hot gas (HG) emerging from the biomass dryer (200).

15. The method (300) according to one of claims 10 to 14,
**characterized by**
optimizing a flow behaviour of the hot gas (HG) in the biomass dryer (200) for a uniform mass flow density distribution of the hot gas (HG) over a cross-sectional area of a hot gas line for the hot gas (HG), comprising preferably recording the flow behaviour, wherein the recording comprises an optical observation of the flow behaviour and / or measuring at least one temperature of the hot gas (HG).

## Revendications

1. Séchoir de biomasse (200) avec au moins un conteneur de biomasse (210) avec un volume interne pour recevoir de la biomasse fluide (BM) et au moins une conduite de gaz chaud pour un gaz chaud (HG) pour sécher la biomasse (BM),
a. une première section (221) de la conduite de gaz chaud étant reliée d'une manière conductrice de la chaleur à l'extérieur du conteneur de biomasse (210) et longeant l'extérieur à un fond (213) du conteneur de biomasse (210) pour la conduction du gaz chaud (HG) ; et
b. la conduite de gaz chaud comprenant au moins une deuxième section (222) en aval de la première section (221) dans le sens d'écoulement du gaz chaud (HG) pour guider le gaz chaud (HG) dans une direction horizontale, la deuxième section (222) étant disposée au-dessus du conteneur de biomasse (210) et relié au volume interne du conteneur de biomasse (210) pour l'échange de gaz,
**caractérisé par**
un moyen de transport pour transporter la biomasse (BM) d'une zone inférieure du volume interne du conteneur de biomasse (210) vers une zone supérieure du volume interne, qui est reliée à la seconde section (222) de la conduite de gaz chaud pour l'échange de gaz.

2. Séchoir de biomasse (200) selon la revendication 1,
**caractérisé en ce que**
la conduite de gaz chaud comprend une section de transition pour guider verticalement le gaz chaud de la première section (221) dans la deuxième section (222), la section de transition étant séparée du volume interne par rapport à un échange de matière.

3. Séchoir de biomasse (200) selon l'une des revendications 1 à 2,
**caractérisé en ce que**
le moyen de transport comprend un certain nombre de moyens de décollement (232) pour le décapage de la biomasse (BM) d'une surface intérieure du conteneur de biomasse (210), au moins l'un des moyens de décapage (232) ayant de préférence un évidement pour recevoir de la biomasse (BM).

4. Séchoir de biomasse (200) selon l'une des revendications 1 à 3,
**caractérisé par**
au moins un distributeur (240) pour répartir uniformément une densité de débit massique du gaz chaud (HG) sur une section transversale de la conduite de gaz chaud, le distributeur (240) comprenant une pluralité de surfaces de sortie (241) pour le gaz chaud (HG), qui couvrent ensemble la surface de section transversale.

5. Séchoir de biomasse (200) selon la revendication 4,
**caractérisé en ce que**
au moins un premier élément de réglage plat (242) et un autre élément de réglage plat (243) sont disposées dans le sens d'écoulement du gaz chaud (HG) devant au moins une surface de sortie (241) du distributeur (240) orthogonalement à la direction d'écoulement,
a. au moins l'un des éléments de réglage (242, 243) pouvant être déplacé dans au moins une direction orthogonale à la direction d'écoulement, et
b. chacun des éléments de régulation (242, 243) présentant un certain nombre d'ouvertures (244), les ouvertures (244) correspondantes des éléments de réglage (242, 243) pouvant être disposés l'une derrière l'autre dans la direction d'écoulement du gaz chaud (HG).

6. Séchoir de biomasse (200) selon l'une des revendications 1 à 5,
**caractérisé par**
un certain nombre de capteurs pour surveiller une teneur en eau de la biomasse (BM), au moins l'un des capteurs étant choisi parmi
a. un capteur de niveau de remplissage (251) pour mesurer un niveau de remplissage du conteneur de biomasse (210),
b. un capteur de pression pour mesurer un poids du conteneur de biomasse (210) et
c. un capteur de couple pour mesurer un couple d'entraînement d'un moyen de transport pour la biomasse (BM).

7. Séchoir de biomasse (200) selon l'une des revendications 1 à 6,
**caractérisé par**
a. au moins un dispositif de levage (260) pour le réglage en hauteur d'au moins un côté du conteneur de biomasse (210) ;
b. un boîtier (131) enfermant le conteneur de biomasse (210) et au moins la première section (221) et le seconde section (222) de la conduite de gaz chaud,
c. un module de remplissage (120) pour le remplissage du conteneur de biomasse (210) avec la biomasse (BM) et / ou
d. un dispositif de commande pour commander, régler, surveiller et / ou documenter le fonctionnement du séchoir de biomasse (200).

8. Séchoir de biomasse (200) selon l'une des revendications 1 à 7,
**caractérisé par**
au moins un dispositif de sécurité qui est choisi parmi
a. un volet de décompression dans un boîtier (131) du séchoir de biomasse (200) ;
b. un dispositif de précipitation pour la précipitation de composants potentiellement dangereux de la biomasse (BM) et
c. un dispositif d'épuration des gaz d'échappement (271) pour enlever des composantes odorantes et / ou polluantes du gaz chaud (HG).

9. Séchoir de biomasse (200) selon l'une des revendications 1 à 8,
**caractérisé par**
un dispositif de mouvement pour transporter le séchoir de biomasse (200), le dispositif de mouvement comprenant de préférence une enceinte transportable enfournant au moins le conteneur de biomasse (210) ainsi que la première section (221) et la seconde section (222) de la conduite de gaz chaud, l'enceinte comprenant de manière particulièrement préférée un conteneur ISO.

10. Procédé (300) de séchage de biomasse fluide (BM) dans un séchoir de biomasse (200) selon l'une des revendications 1 à 9, comprenant les étapes suivantes :
a. un chauffage (310) d'un conteneur de biomasse (210) contenant la biomasse (BM) par un gaz chaud (HG) à partir d'un extérieur d'un fond du conteneur de biomasse (210), le gaz chaud (HG) étant guidé le long de l'extérieur dans une conduite de gaz chaud, et
b. un passage (320) du gaz chaud (HG) devant une ouverture supérieure du conteneur de biomasse (210), le gaz chaud (HG) étant guidé dans une direction horizontale dans une conduite de gaz chaud qui est reliée à un volume interne du conteneur de biomasse (210) pour l'échange de gaz,
**caractérisé par**
c. un transport de la biomasse (BM) d'une zone inférieure du volume interne du conteneur de biomasse (210) vers une zone supérieure du volume interne, qui est reliée à la seconde section (222) de la conduite de gaz chaud pour l'échange de gaz.

11. Procédé (300) selon la revendication 10,
**caractérisé par**
un transport au moins une partie de la biomasse (BM) vers le gaz chaud (HG) qui passe.

12. Procédé (300) selon la revendication 10 ou 11,
**caractérisé par**
une détermination (330) d'une teneur en eau de la biomasse (BM), la détermination (330) comprenant une mesure d'au moins une propriété physique de la biomasse (BM) choisie parmi le volume, la masse et la viscosité de la biomasse (BM).

13. Procédé (300) selon l'une des revendications 10 à 12,
**caractérisé par**
une surveillance (340) du procédé (300), la surveillance (340) comprenant une mesure d'au moins l'un des paramètres de sécurité suivants du procédé (300) :
a. une température d'entrée du gaz chaud (HG) entrant dans le séchoir de la biomasse (200) ;
b. une température de biomasse de la biomasse (BM) ;
c. un état de mouvement d'un moyen de transport pour la biomasse (BM) ;
d. un niveau de remplissage du conteneur de biomasse (210) ;
e. un niveau de remplissage d'un épurateur d'air d'échappement pour éliminer des composantes à odeurs nuisibles et / ou polluantes de l'environnement du gaz chaud (HG) et
f. une concentration d'une composante potentiellement dangereuse, à odeurs nuisibles et / ou polluante de l'environnement dans le gaz chaud (HG).

14. Procédé (300) selon l'une des revendications 10 à 13,
**caractérisé par**
une détermination (350) d'une consommation de chaleur du séchoir de biomasse (200), la détermination (350) comprenant une mesure d'au moins l'une des propriétés physiques suivantes du gaz chaud (HG) :
a. une température d'entrée et un débit massique d'entrée du gaz chaud (HG) entrant dans le séchoir de la biomasse (200) et
b. une température de sortie et un débit massique de sortie du gaz chaud (HG) sortant du séchoir à biomasse (200).

15. Procédé (300) selon l'une des revendications 10 à 14,
**caractérisé par**
une optimisation d'un comportement d'écoulement du gaz chaud (HG) dans le séchoir de biomasse (200) pour une distribution de densité de débit massique uniforme du gaz chaud (HG) sur un surface en coupe transversale d'une conduite de gaz chaud pour le gaz chaud (HG), comprenant de préférence un enregistrement du comportement d'écoulement, l'enregistrement comprenant une observation optique de la conduite d'écoulement et / ou une mesure d'au moins une température du gaz chaud (HG).
